# EUROPEAN PATENT APPLICATION

(11) **EP 4 343 895 A1**
(43) Date of publication of application: **27.03.2024**
(21) Application number: 21940727.7
(22) Date of filing: 18.05.2021
(51) Int. Cl.: H01M 4/62, H01M 10/052

(54) **LITHIUM SECONDARY BATTERY, METHOD FOR USING SAME, AND METHOD FOR MANUFACTURING LITHIUM SECONDARY BATTERY**

(71) Applicant: Terawatt Technology K.K., Yokohama-shi, Kanagawa 226-0026 (JP)
(72) Inventor: OYAMA, Gosuke, Yokohama-shi, Kanagawa 226-0026 (JP); OGATA, Ken, Yokohama-shi, Kanagawa 226-0026 (JP)
(74) Representative: Mewburn Ellis LLP
(86) International application number: PCT/JP2021/018822
(87) International publication number: WO 2022/244110

(57) **Abstract**

The present invention provides a lithium secondary battery having a high energy density and excellent cycle characteristics and productivity, a method for manufacturing the lithium secondary battery, and the like. The present invention relates to a lithium secondary battery including a positive electrode, and a negative electrode which does not have a negative electrode active material, in which the positive electrode contains a positive electrode active material and a lithium-containing compound represented by Li₆MnₓCo₁₋ₓO₄ (0 < x < 1). The present invention also relates to a method for manufacturing a lithium secondary battery including a step of preparing a positive electrode containing a positive electrode active material and a lithium-containing compound represented by Li₆MnₓCo₁₋ₓO₄ (0 < x < 1), and a negative electrode which does not have a negative electrode active material, a step of arranging the positive electrode and the negative electrode so as to face each other, and a step of applying a voltage between the positive electrode and the negative electrode to initially charge the battery under a charging condition in which a cut-off voltage is 4.3 V or more and 5.0 V or less.

## Description

### Background

### Field

The present invention relates to a lithium secondary battery, a method for using the same, and a method for manufacturing a lithium secondary battery.

### Description of Related Art

In recent years, the technology of converting natural energy such as solar light and wind power into electric energy has attracted attention. Under such a situation, various secondary batteries have been developed as a highly safe power storage device capable of storing a lot of electric energy.

Among them, lithium secondary batteries which perform charge and discharge by transferring lithium ions between a positive electrode and a negative electrode are known to exhibit a high voltage and a high energy density. As a typical lithium secondary battery, a lithium ion secondary battery (LIB) that has an active material capable of retaining a lithium element in the positive electrode and the negative electrode and performs charge and discharge by exchanging lithium ions between the positive electrode active material and the negative electrode active material is known.

For the purpose of realizing a high energy density, a lithium secondary battery (lithium metal battery; LMB) that a lithium metal is used as the negative electrode active material, instead of a material into which the lithium ion can be inserted, such as a carbon material, has been developed. For example, Patent Document 1 discloses a rechargeable battery using, as a negative electrode, an electrode based on a lithium metal.

For the purpose of further achieving a high energy density and improving productivity, or the like, a lithium secondary battery using a negative electrode that does not have a negative electrode active material such as the carbon material and the lithium metal has been developed. For example, Patent Document 2 discloses a lithium secondary battery including a positive electrode, a negative electrode, and a separation membrane and an electrolyte interposed therebetween. In the negative electrode, metal particles are formed on a negative electrode current collector and transferred from the positive electrode, when the battery is charged, to form a lithium metal on the negative electrode current collector in the negative electrode. Patent Document 2 discloses that such a lithium secondary battery shows the possibility of providing a lithium secondary battery which has overcome the problem due to the reactivity of the lithium metal and the problem caused during assembly process and therefore has improved performance and service life.

### Citation List

### Patent Documents

Patent Document 1: Published Japanese Translation of PCT application No 2006-500755
Patent Document 2: Published Japanese Translation of PCT application No 2019-505971

### Summary

As a result of detailed investigation of batteries in the related art including those described in Patent Document 1 and Patent Document 2, the present inventors have found that at least either one of their energy density and cycle characteristics is not sufficient.

For example, in a lithium secondary battery that includes a negative electrode having a negative electrode active material, due to the volume or mass occupied by the negative electrode active material, it is difficult to sufficiently increase the energy density. In addition, even in an anode free lithium secondary battery in the related art, which includes a negative electrode not having a negative electrode active material, due to repeated charge and discharge, a dendrite-like lithium metal is likely to be formed on a surface of the negative electrode, which is likely to cause a short circuit and capacity reduction, resulting in insufficient cycle characteristics.

By the way, various investigations have been conducted on lithium secondary batteries in order to improve productivity. For example, there is a case where the material of each component of the lithium secondary battery, particularly the material of the positive electrode, has low stability in the atmosphere, and in such a case, there is a problem that the battery has to be manufactured by more precisely controlling the humidity than the dry room used in a normal step or the like.

The present invention has been made in view of the above problems and a purpose is to provide a lithium secondary battery having a high energy density and excellent cycle characteristics and productivity, a method for using the same, and a method for manufacturing a lithium secondary battery.

A lithium secondary battery according to one embodiment of the present invention includes a positive electrode, and a negative electrode which does not have a negative electrode active material, and the positive electrode contains a positive electrode active material and a lithium-containing compound represented by a Li₆MnₓCo₁₋ₓO₄ (0 < x < 1).

Since such a lithium secondary battery does not have a negative electrode active material, the volume and mass of the entire battery is small and the energy density is high in principle as compared with a lithium secondary battery having a negative electrode active material. In such a battery, charge and discharge are performed by precipitating a lithium metal on the surface of the negative electrode and electrolytically dissolving the precipitated lithium metal.

In addition, the lithium-containing compound represented by Li₆MnₓCo₁₋ₓO₄ (0 < x < 1) causes an oxidation reaction in the normal charge and discharge potential range of the positive electrode active material, but does not substantially cause a reduction reaction. Therefore, in the lithium secondary battery containing the above-described lithium-containing compound, while the lithium-containing compound causes an oxidation reaction (that is, releases lithium ions) at the time of the initial charge of the battery, the lithium-containing compound does not substantially cause a reduction reaction at the time of the subsequent discharge (that is, the lithium-containing compound before discharge is not reformed), and the lithium element derived from the lithium-containing compound remains as a lithium metal on the surface of the negative electrode. Then, in the lithium secondary battery in which lithium metal remains on the surface of the negative electrode after the initial charge as described above, it is considered that the remaining lithium metal serves as a scaffold when the lithium metal is further precipitated on the surface of the negative electrode at the time of the subsequent charge, and it is considered that the remaining lithium metal assists the uniform precipitation of the lithium metal on the surface of the negative electrode. From the above, in the lithium secondary battery according to the one embodiment of the present invention, the growth of a dendrite-like lithium metal on the negative electrode is suppressed, and the lithium secondary battery has excellent cycle characteristics. However, the factor by which the lithium secondary battery according to the one embodiment of the present invention has excellent cycle characteristics is not limited thereto.

Further, since the above-described lithium-containing compound has excellent stability with respect to a trace amount of moisture in the atmosphere, a lithium secondary battery with a high energy density and excellent cycle characteristics can be provided in an economically rational manner (with high productivity).

The lithium secondary battery is preferably initially charged under a charging condition in which a cut-off voltage is 4.3 V or more and 5.0 V or less.

The lithium-containing compound represented by Li₆MnₓCo₁₋ₓO₄ (0 < x < 1) starts to cause an oxidation reaction under the condition in which the voltage of the battery is about 4.3 V. Therefore, according to such a mode, the function of the lithium-containing compound as a positive-electrode sacrificial agent described in detail above is more preferably exhibited, and the lithium secondary battery tends to have further improved cycle characteristics.

A content of the lithium-containing compound is preferably 1.0% by mass or more and 15.0% by mass or less relative to the total mass of the positive electrode. According to such a mode, the function of the lithium-containing compound as a positive-electrode sacrificial agent is more preferably exhibited, and the lithium secondary battery tends to have further improved cycle characteristics.

The lithium-containing compound is preferably a compound represented by Li₆MnₓCo₁₋ₓO₄ (0.2 ≤ x ≤ 0.8). According to such a mode, the function of the lithium-containing compound as a positive-electrode sacrificial agent is more preferably exhibited, and the lithium secondary battery tends to have further improved cycle characteristics. In addition, the productivity of the lithium secondary battery also tends to be further improved.

The negative electrode may be an electrode consisting of at least one selected from the group consisting of Cu, Ni, Ti, Fe, other metals that are not alloyed with Li, and alloys thereof, and stainless steel (SUS). According to such a mode, the lithium secondary battery tends to have more excellent safety and productivity.

The lithium secondary battery has preferably an energy density of 350 Wh/kg or more.

The lithium secondary battery according to the one embodiment of the present invention is preferably used by a method for using the lithium secondary battery, the method including performing a charge and discharge cycle including at least one discharging step and at least one charging step, after charging the battery at a cut-off voltage of 4.3 V or more and 5.0 V or less, in which the charge and discharge cycle is performed such that a cut-off voltage in the charging step is lower than a cut-off voltage at the time of the first initial charge performed at a cut-off voltage of 4.3 V or more and 5.0 V or less.

A method for manufacturing a lithium secondary battery according to another embodiment includes a step of preparing a positive electrode containing a positive electrode active material and a lithium-containing compound represented by Li₆MnₓCo₁₋ₓO₄ (0 < x < 1), and a negative electrode which does not have a negative electrode active material, a step of arranging the positive electrode and the negative electrode so as to face each other, and a step of applying a voltage between the positive electrode and the negative electrode to initially charge the battery under a charging condition in which a cut-off voltage is 4.3 V or more and 5.0 V or less.

According to such a manufacturing method, it is possible to manufacture a battery having a high energy density due to the fact that the negative electrode does not have the negative electrode active material. In addition, in such a manufacturing method, since the lithium-containing compound represented by Li₆MnₓCo₁₋ₓO₄ (0 < x < 1) effectively and reliably functions as the positive-electrode sacrificial agent as described in detail above, the lithium secondary battery manufactured by the above method has excellent cycle characteristics. Further, since the lithium-containing compound represented by Li₆MnₓCo₁₋ₓO₄ (0 < x < 1) has excellent stability with respect to a trace amount of moisture in the atmosphere and can be handled without strictly controlling humidity or the like, the above manufacturing method has high productivity.

In the above manufacturing method, a content of the lithium-containing compound is preferably 1.0% by mass or more and 15.0% by mass or less relative to the total mass of the positive electrode. According to such a mode, there is a tendency that a lithium secondary battery having even more excellent cycle characteristics can be manufactured.

In the above manufacturing method, the lithium-containing compound is preferably a compound represented by Li₆MnₓCo₁₋ₓO₄ (0.2 ≤ x ≤ 0.8). According to such a mode, there is a tendency that the lithium secondary battery having more excellent cycle characteristics can be manufactured with high productivity.

In the manufacturing method, the negative electrode is preferably an electrode consisting of at least one selected from the group consisting of Cu, Ni, Ti, Fe, other metals that are not alloyed with Li, and alloys thereof, and stainless steel (SUS). According to such a mode, there is a tendency that a lithium secondary battery having more excellent safety and productivity can be manufactured.

According to the present invention, it is possible to provide a lithium secondary battery having a high energy density and excellent cycle characteristics and productivity, a method for using the same, and a method for manufacturing a lithium secondary battery.

### Brief Description of Drawings

Fig. 1 is a schematic cross-sectional view of a lithium secondary battery according to a first embodiment.
Fig. 2 is a schematic cross-sectional view of the use of the lithium secondary battery according to the first embodiment.
Fig. 3 is a schematic cross-sectional view of a lithium secondary battery according to a second embodiment.
Figs. 4A to 4C are schematic cross-sectional views of a buffering function layer in the lithium secondary battery according to the second embodiment, Fig. 4A shows a fibrous buffering function layer which is one embodiment of the buffering function layer, Fig. 4B shows a precipitation mode of a lithium metal precipitated on the fibrous buffering function layer, and Fig. 4C shows one embodiment of a member constituting the fibrous buffering function layer.

### Detailed Description

The embodiment of the present invention (hereinafter referred to as the "present embodiment") will hereinafter be described in detail while referring to the drawings as needed. In the drawings, the same element will be represented by the same reference numeral and an overlapping description will be omitted. Unless otherwise specifically described, the positional relationship such as vertical or horizontal one will be based on the positional relationship shown in the drawings. Further, a dimensional ratio in the drawings is not limited to the ratio shown in the drawings. In addition, although a plurality of the present embodiments will be described in detail below, the content described as the "present embodiment" in the description in each embodiment can also be applied to embodiments other than the embodiment. For example, in a case where there is a description that "the negative electrode of the present embodiment does not have the negative electrode active material" in the first embodiment, the description can be applied to the other embodiments as well.

### [First Embodiment]

### (Lithium Secondary Battery)

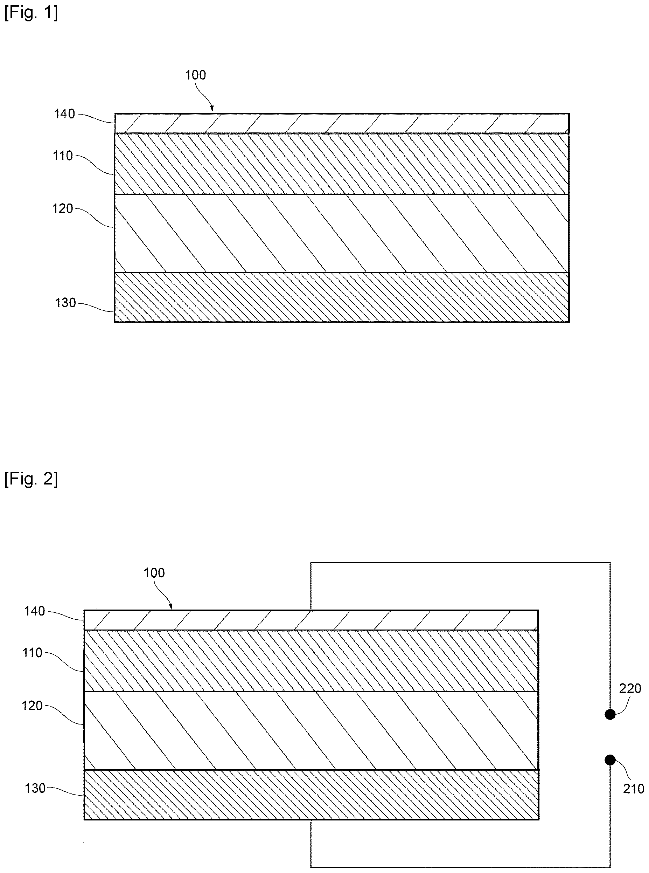

Fig. 1 is a schematic cross-sectional view of a lithium secondary battery according to a first embodiment (hereinafter, referred to as a "first embodiment"). As shown in Fig. 1, a lithium secondary battery 100 in the first embodiment includes a positive electrode 110, and a negative electrode 130 which does not have a negative electrode active material. The positive electrode 110 contains a positive electrode active material and a lithium-containing compound represented by Li₆MnₓCo₁₋ₓO₄ (0 < x < 1).

In addition, the lithium secondary battery 100 includes a separator 120 between the positive electrode 110 and the negative electrode 130, and the positive electrode 110 has a positive electrode current collector 140 on the surface on the opposite side of the surface facing the separator 120.

The lithium secondary battery of the present embodiment disclosed in the present specification is typically a liquid electrolyte-based lithium secondary battery (particularly a non-aqueous electrolyte solution-based lithium secondary battery) including an electrolyte solution, a solid or semi-solid electrolyte-based lithium secondary battery including a polymer electrolyte, or a gel electrolyte-based lithium secondary battery including a gel electrolyte. However, as long as the problems of the present invention are solved, the lithium secondary battery of the present embodiment may be, for example, an all-solid-state battery including an inorganic solid electrolyte other than the above-described lithium secondary batteries.

Hereinafter, each configuration will be described in detail.

### (Negative Electrode)

The negative electrode of the present embodiment does not have a negative electrode active material. In the present specification, the term "negative electrode active material" is a material that causes an electrode reaction, that is, an oxidation reaction and a reduction reaction at the negative electrode. Specifically, examples of the negative electrode active material in the present specification include a lithium metal and a host material for a lithium element (lithium ions or lithium metal). The host material for the lithium element means a material provided to retain the lithium ions or the lithium metal in the negative electrode. Such a retaining mechanism is not particularly limited, and examples thereof include intercalation, alloying, and occlusion of metallic clusters, and intercalation is typically used.

In the lithium secondary battery in the present embodiment, since the negative electrode does not have a negative electrode active material before the initial charge of the battery, charge and discharge are performed by precipitating a lithium metal on the negative electrode and electrolytically dissolving the precipitated lithium metal. Therefore, in the lithium secondary battery in the present embodiment, the volume occupied by the negative electrode active material and the mass of the negative electrode active material are reduced as compared with a lithium secondary battery containing the negative electrode active material, and the volume and mass of the entire battery are small, so that the energy density is high in principle.

In the lithium secondary battery in the present embodiment, the negative electrode does not have a negative electrode active material before the initial charge of the battery, a lithium metal is precipitated on the negative electrode when the battery is charged, and the precipitated lithium metal is electrolytically dissolved when the battery is discharged. Therefore, in the lithium secondary battery in the present embodiment, the negative electrode serves as a negative electrode current collector.

In a case where the lithium secondary battery in the present embodiment is compared with a lithium ion battery (LIB) and a lithium metal battery (LMB), the following points are different.

In the lithium ion battery (LIB), a negative electrode contains a host material for a lithium element (lithium ions or lithium metal), this material is filled with the lithium element when the battery is charged, and the host material releases the lithium element, thereby discharging the battery. The LIB is different from the lithium secondary battery in the present embodiment in that the negative electrode has the host material for the lithium element.

The lithium metal battery (LMB) is manufactured by using, as a negative electrode, an electrode having lithium metal on the surface thereof or single lithium metal. That is, the LMB is different from the lithium secondary battery in the present embodiment in that the negative electrode has the lithium metal, which is the negative electrode active material, immediately after assembling the battery, that is, before the initial charge of the battery. The LMB uses the electrode containing a lithium metal having high flammability and reactivity in the manufacturing. However, since the lithium secondary battery of the present embodiment is manufactured using the negative electrode which does not have a lithium metal, the lithium secondary battery in the present embodiment has more excellent safety and productivity. In addition, the lithium secondary battery of the present embodiment has excellent energy density and cycle characteristics as compared with the LMB.

In the present specification, the expression that the negative electrode "does not have a negative electrode active material" means the negative electrode does not have the negative electrode active material or does not substantially have the negative electrode active material. The fact that the negative electrode does not substantially have the negative electrode active material means the content of the negative electrode active material in the negative electrode is 10% by mass or less relative to the total mass of the negative electrode. The content of the negative electrode active material in the negative electrode is preferably 5.0% by mass or less and may be 1.0% by mass or less, 0.1 % by mass or less, or 0.0% by mass or less relative to the total mass of the negative electrode. Since the negative electrode does not have the negative electrode active material or the content of the negative electrode active material in the negative electrode is within the above-described range, the energy density of the lithium secondary battery is high.

In the present specification, the term "lithium secondary battery including a negative electrode which does not have a negative electrode active material" means the negative electrode does not have the negative electrode active material before initial charge of the battery. Therefore, the expression "negative electrode which does not have a negative electrode active material" may be rephrased as "negative electrode which does not have a negative electrode active material before initial charge of the battery", "negative electrode which does not have a negative electrode active material other than a lithium metal regardless of the charge state of the battery and does not have a lithium metal before initial charge", "negative electrode current collector which does not have a lithium metal before initial charge", or the like. In addition, the term "lithium secondary battery including a negative electrode which does not have a negative electrode active material" may be rephrased as an anode free lithium battery, a zero anode lithium battery, or an anodeless lithium battery.

In the present specification, the term "before initial charge" of the battery means a state from the time when the battery is assembled to the time when the battery is first charged. In addition, the term "at the end of discharge" of the battery means a state in which a discharge reaction involving the positive electrode active material does not substantially occur even when the voltage of the battery is further reduced, and the voltage of the battery at the time is, for example, 1.0 to 3.5 V, 2.0 to 3.2 V, or 2.5 to 3.0 V.

In the negative electrode in the present embodiment, regardless of the charge state of the battery, the content of the negative electrode active material other than the lithium metal is 10% by mass or less relative to the total mass of the negative electrode, and preferably 5.0% by mass or less, and may be 1.0% by mass or less, 0.1% by mass or less, 0.0% by mass or less, or 0% by mass or less.

In addition, in the negative electrode of the present embodiment, before the initial charge, the content of the lithium metal is 10% by mass or less relative to the entire negative electrode, preferably 5.0% by mass or less, and more preferably 1.0% by mass or less or 0.1 % by mass or less. The negative electrode of the present embodiment particularly preferably does not have a lithium metal before the initial charge, that is, the content of the lithium metal is 0% by mass relative to the entire negative electrode.

In the lithium secondary battery of the present embodiment, in a case where the voltage of the battery is 2.5 V or more and 3.5 V or less, even when the content of the lithium metal may be 10% by mass or less (preferably 5.0% by mass or less, and may be 1.0% by mass or less) relative to the entire negative electrode, or in a case where the voltage of the battery is 2.5 V or more and 3.0 V or less, the content of the lithium metal may be 10% by mass or less (preferably 5.0% by mass or less, and may be 1.0% by mass or less) relative to the entire negative electrode.

In addition, in the lithium secondary battery in the present embodiment, a ratio M_{3.0}/M_{4.2} of a mass M_{3.0} of the lithium metal precipitated on the negative electrode in a state in which the voltage of the battery is 3.0 V to a mass M_{4.2} of the lithium metal precipitated on the negative electrode in a state in which the voltage of the battery is 4.2 V is preferably 30% or less, more preferably 25% or less, and still more preferably 20% or less. The ratio M_{3.0}/M_{4.2} may be 1.0% or more, 2.0% or more, 3.0% or more, or 4.0% or more.

Examples of the negative electrode active material in the present specification include lithium metals, alloys containing a lithium metal, carbon-based materials, metal oxides, metals alloyed with lithium, and alloys containing the metals. The carbon-based material is not particularly limited and examples include graphene, graphite, hard carbon, mesoporous carbon, carbon nanotube, and carbon nanohorn. The metal oxide is not particularly limited and examples include titanium oxide-based compounds, tin oxide-based compounds, and cobalt oxide-based compounds. Examples of metals alloyed with lithium include silicon, germanium, tin, lead, aluminum, and gallium.

The negative electrode of the present embodiment is not particularly limited as long as the negative electrode does not have a negative electrode active material and can be used as a current collector. For example, the negative electrode is an electrode consisting of at least one selected from the group consisting of Cu, Ni, Ti, and Fe, metals that are not alloyed with Li and alloys thereof, and stainless steel (SUS), and preferably an electrode consisting of at least one selected from the group consisting of Cu, Ni, and alloys thereof, and stainless steel (SUS). When this negative electrode is used, the energy density and productivity of the battery tend to be further improved.

When SUS is used as the negative electrode, any well-known type of SUS can be used. One or two or more of the negative electrode materials may be used either singly or in combination. The term "metals that are not alloyed with Li" as used herein means a metal that does not react with a lithium ion or lithium metal to form an alloy under the operation conditions of the lithium secondary battery.

The average thickness of the negative electrode in the present embodiment is preferably 4 µm or more and 20 µm or less, more preferably 5 µm or more and 18 µm or less, and still more preferably 6 µm or more and 15 µm or less. In such a mode, since the occupation volume of the negative electrode in the lithium secondary battery is decreased, the lithium secondary battery 100 has a more improved energy density.

In addition, in the present specification, the term "average thickness" means an additive average when the target member is observed at an enlarged scale using a scanning electron microscope or an optical microscope and the thickness of three or more locations is measured.

### (Positive Electrode)

The positive electrode of the present embodiment contains a positive electrode active material and a lithium-containing compound represented by Li₆MnₓCo₁₋ₓO₄ (0 < x < 1). Since the positive electrode contains a positive electrode active material the lithium secondary battery of the present embodiment has excellent stability and a high output voltage.

In the present specification, the term "positive electrode active material" is a material that causes an electrode reaction, that is, an oxidation reaction and a reduction reaction at the positive electrode. Specific examples thereof include a host material of a lithium element (typically, lithium ion). The positive electrode active material in the present specification is typically a material that causes an oxidation-reduction reaction under the condition in which the voltage of the lithium secondary battery of the present embodiment is in a range of 3.0 to 4.2 V, or a material that causes an oxidation-reduction reaction in a potential range of 3.0 to 4.2 V (vs. Li/Li⁺ reference electrode).

Such a positive electrode active material is not particularly limited and examples include metal oxides and metal phosphates. The metal oxides are not particularly limited and examples include cobalt oxide-based compounds, manganese oxide-based compounds, and nickel oxide-based compounds. The metal phosphates are not particularly limited and examples include iron phosphate-based compounds and cobalt phosphate-based compounds.

Examples of typical positive electrode active materials include LiCoO₂, LiNiₓCo_{y}Mn_{z}O (x + y + z = 1), LiNiₓCo_{y}Al_{z}O (x + y + z = 1), LiNiₓMn_{y}O (x + y = 1), LiNiO₂, LiMn₂O₄, LiFePO, LiCoPO, LiFeOF, LiNiOF, and LiTiS₂. One or two or more of the positive electrode active materials may be used either singly or in combination. The positive electrode active material of the present embodiment is preferably at least one selected from the group consisting of LiCoO₂, LiNiₓCo_{y}Mn_{z}O (x + y + z = 1), LiNiₓCo_{y}Al_{z}O (x + y + z = 1), LiNiₓMn_{y}O (x + y = 1), LiNiO₂, and LiMn₂O₄.

In addition to the positive electrode active material, the positive electrode of the present embodiment contains a lithium-containing compound represented by Li₆MnₓCo₁₋ₓO₄ (0 < x < 1).

The lithium-containing compound represented by Li₆MnₓCo₁₋ₓO₄ (0 < x < 1) can cause an oxidation reaction in the charge and discharge potential range of the positive electrode active material as described above, while the lithium-containing compound does not substantially cause a reduction reaction in the charge and discharge potential range. Therefore, when the lithium secondary battery of the present embodiment is initially charged, the lithium-containing compound represented by Li₆MnₓCo₁₋ₓO₄ (0 < x < 1) causes an oxidation reaction while releasing lithium ions, and releases electrons to the negative electrode through an external circuit. As a result, the lithium ions derived from the lithium-containing compound are precipitated on the surface of the negative electrode as a lithium metal. Further, when the lithium secondary battery of the present embodiment is discharged (that is, the initially discharged) after the initial charge is completed, the lithium metal precipitated on the negative electrode surface is electrolytically dissolved, and electrons are transferred from the negative electrode to the positive electrode through the external circuit. However, the above-described lithium-containing compound substantially does not cause a reduction reaction under normal discharge conditions, and it is substantially not possible to return the state of the battery to a state before the oxidation reaction occurs.

Therefore, when the lithium secondary battery of the present embodiment is discharged after the initial charge, most of the lithium metal derived from the lithium-containing compound remains on the negative electrode, and even after the battery discharge is completed, some of the lithium metal remains on the negative electrode. It is considered that the remaining lithium metal serves as a scaffold when the lithium metal is further precipitated on the surface of the negative electrode in the charging step following the initial discharge, and it is considered that the remaining lithium metal assists the uniform precipitation of the lithium metal on the surface of the negative electrode. As a result, in the lithium secondary battery of the present embodiment, the growth of a dendrite-like lithium metal on the negative electrode is suppressed, and the lithium secondary battery of the present embodiment has excellent cycle characteristics. However, the factor by which the lithium secondary battery according to the present embodiment has excellent cycle characteristics is not limited thereto.

In the field of batteries, an additive that is added to a positive electrode and causes an oxidation reaction and substantially does not cause a reduction reaction in the charge and discharge potential range of the positive electrode active material is generally referred to as a positive-electrode sacrificial agent. Various materials have been proposed for various batteries as positive-electrode sacrificial agents.

The present inventors have found that in the lithium secondary battery (anode-free secondary battery) including a negative electrode which does not have a negative electrode active material, the use of a lithium-containing compound represented by Li₆MnₓCo₁₋ₓO₄ (0 < x < 1) among the positive-electrode sacrificial agents further improves the cycle characteristics.

The present inventors have found at least the following factors as the factors thereof.
(1) In a lithium ion battery using a negative electrode having a negative electrode active material such as a graphite material, initial charge is usually performed such that the cut-off voltage does not exceed 4.3 V, and in a case where charge is performed to exceed the cut-off voltage of 4.3 V, the electrolyte solution and/or the active material is decomposed to deteriorate the cycle characteristics. On the other hand, the present inventors have been found that in a lithium secondary battery (anode-free secondary battery) including a negative electrode which does not have a negative electrode active material, even when the lithium secondary battery is charged until the cut-off voltage exceeds 4.3 V and reaches about 5.0 V in the initial charge, the cycle characteristics are not deteriorated. This is considered to be due to the relatively low negative electrode potential in the anode-free secondary battery.
(2) The present inventors have found that in a case where a lithium secondary battery (anode-free secondary battery) including a negative electrode which does not have a negative electrode active material contains a lithium-containing compound represented by Li₆MnₓCo₁₋ₓO₄ (0 < x < 1) as a positive-electrode sacrificial agent, the lithium-containing compound releases lithium ions under the condition in which the voltage of the battery in the initial charge reaches about 4.3 V.

Further, the present inventors have found that (3) in a case where a lithium-containing compound represented by Li₆MnO₄ is used as a positive-electrode sacrificial agent, a sufficient lithium release reaction does not occur even when the cut-off voltage is set to about 5.0 V, and Li₆MnO₄ does not sufficiently exhibit the function as the positive-electrode sacrificial agent, (4) in a case where a lithium-containing compound represented by Li₆CoO₄ is used as a positive-electrode sacrificial agent, the lithium-containing compound is unstable to a trace amount of moisture contained in the atmosphere, and (5) in a case where a lithium-containing compound represented by Li₆MnₓCo₁₋ₓO₄ (0 < x < 1) is used, the problems described in (3) and (4) above do not arise. In particular, the lithium-containing compound represented by Li₆MnₓCo₁₋ₓO₄ (0 < x < 1) has high stability in the atmosphere compared to the lithium-containing compound represented by Li₆CoO₄. Specifically, in a case where a positive electrode is prepared using a highly alkaline material such as Li₆CoO₄, a positive electrode mixture slurry is prepared by kneading with a binder such as polyvinylidene fluoride (PVDF) or the like, Li₆CoO₄ absorbs moisture in the atmosphere to cause a rapid increase in viscosity and/or gelation of the positive electrode mixture slurry. However, when the lithium-containing compound represented by Li₆MnₓCo₁₋ₓO₄ (0 < x < 1) is used, such problems are less likely to arise.

Therefore, since the lithium secondary battery of the present embodiment uses the lithium-containing compound represented by Li₆MnₓCo₁₋ₓO₄ (0 < x < 1), which has high stability in the atmosphere, as the positive-electrode sacrificial agent, there is no need to strictly adjust humidity and the like in the atmosphere when the positive electrode is prepared, and the positive electrode can be manufactured in a normal dry room and/or glove box to increase the productivity. In the present specification, the term "high productivity" means not only that the number of lithium secondary batteries that can be manufactured per hour is large, but also that the lithium secondary battery can be manufactured without requiring special equipment and/or environment.

In the positive electrode of the present embodiment, x of the lithium-containing compound represented by Li₆MnₓCo₁₋ₓO₄ (0 < x < 1) is not particularly limited as long as it is a value larger than 0, but from the viewpoint of improving the productivity of the lithium secondary battery, the value is preferably 0.1 or more. From the same viewpoint, the value of x above is more preferably 0.2 or more, and still more preferably 0.3 or more, and may be 0.4 or more, 0.5 or more, or 0.6 or more.

The value of x above is not particularly limited as long as the value is smaller than 1, but from the viewpoint of improving the cycle characteristics of the lithium secondary battery, the value is preferably 0.9 or less, more preferably 0.8 or less, and still more preferably 0.7 or less. The value of x above may be 0.6 or less, 0.5 or less, or 0.4 or less.

The value of x above may be within a range obtained by any combination of the above upper limit value and lower limit value, and may be, for example, 0.1 ≤ x ≤ 0.9, 0.2 ≤ x ≤ 0.8, or 0.3 ≤ x ≤ 0.7.

The positive electrode of the present embodiment may contain two or more of the above-described lithium-containing compounds having different compositions, and may contain only one lithium-containing compound. In addition, the lithium-containing compound may be a commercially available lithium-containing compound or may be produced by a conventionally known method. A specific production method of the lithium-containing compound will be described later.

As described above, the lithium-containing compound represented by Li₆MnₓCo₁₋ₓO₄ (0 < x < 1) tends to start to release lithium ions under the condition in which the voltage of the battery reaches about 4.3 V during the initial charge. Therefore, the lithium secondary battery of the present embodiment is preferably initially charged under a charging condition in which the cut-off voltage is 4.3 V or more and 5.0 V or less. By performing the initial charge under such a condition, the cycle characteristics of the lithium secondary battery tend to be further improved.

Here, in the present specification, the expression "initial charging is performed under the charging condition in which the cut-off voltage is a value X" means that the battery is continuously charged until the voltage of the battery reaches the value X when the first charge is performed after the battery is assembled.

From the viewpoint of further improving the cycle characteristics of the lithium secondary battery, the lithium secondary battery of the present embodiment is more preferably initially charged under the charging condition in which the cut-off voltage is more than 4.3 V or 4.4 V or more. The cut-off voltage in the initial charge may be 4.5 V or more, 4.6 V or more, or 4.7 V or more.

The lithium secondary battery of the present embodiment is preferably initially charged under the charging condition in which the cut-off voltage is 5.0 V or less. By performing the initial charge under such a condition, the decomposition of the positive electrode active material and/or the electrolyte is reliably suppressed, and thus the cycle characteristics of the lithium secondary battery tend to be further improved.

From the viewpoint of further improving the cycle characteristics of the lithium secondary battery, the lithium secondary battery of the present embodiment is initially charged under the charging condition in which a cut-off voltage of more preferably less than 5.0 V or 4.9 V or less, still more preferably 4.8 V or less, even still more preferably 4.7 V or less. The cut-off voltage in the initial charge may be 4.6 V or less, or 4.5 V or less.

The cut-off voltage in the initial charge may be within a range obtained by any combination of the upper limit value and the lower limit value, and may be, for example, more than 4.3 V and less than 5.0 V, and 4.4 V or more and 4.9 V or less, or 4.4 V or more and 4.7 V or less.

The lithium secondary battery of the present embodiment may be provided to a user after the initial charge or may be provided to the user before the initial charge. In a case where the lithium secondary battery of the present embodiment is provided to the user before the initial charge, the lithium secondary battery of the present embodiment is preferably used according to the method for using the lithium secondary battery of the present embodiment, which will be described later. Specifically, at the time of the first use, it is preferable to charge the battery under the charging condition in which the cut-off voltage is 4.3 V or more and 5.0 V or less.

As described above, the lithium-containing compound represented by Li₆MnₓCo₁₋ₓO₄ (0 < x < 1) can cause an oxidation reaction in the charge and discharge potential range of the positive electrode active material as described above, while the lithium-containing compound does not substantially cause a reduction reaction in the charge and discharge potential range. The expression "can cause an oxidation reaction in the charge and discharge potential range of the positive electrode active material" means that in the charge and discharge potential range of the positive electrode active material, the agent causes an oxidation reaction to release a lithium ion and an electron (also means that the agent is decomposed by an oxidation reaction to release a lithium ion). The expression "does not substantially cause a reduction reaction in a charge and discharge potential range of the positive electrode active material" means that in a charge and discharge potential range of the positive electrode active material, it is not possible or substantially not possible for the positive-electrode sacrificial agent to cause a reduction reaction and receive a lithium ion and an electron or to generate themselves by a reduction reaction under the normal reaction conditions for those skilled in the art. The term "the normal reaction conditions for those skilled in the art" means, for example, conditions under which a lithium secondary battery is discharged.

However, the lithium-containing compound represented by Li₆MnₓCo₁₋ₓO₄ (0 < x < 1) can cause a reduction reaction and receive lithium ions and electrons by making the battery voltage sufficiently lower than the normal battery operating voltage range. Examples of such conditions include a condition in which the voltage of the battery is 2.0 V or less.

In the initial charge of the lithium secondary battery of the present embodiment, the lithium-containing compound represented by Li₆MnₓCo₁₋ₓO₄ (0 < x < 1) is in an oxidized state in which the lithium-containing compound releases lithium ions in a capacity ratio of, for example, 50% or more, 60% or more, 70% or more, 80% or more, 90% or more, 95% or more, or 99% or more of the addition amount at the time of manufacturing.

In the initial discharge of the lithium secondary battery of the present embodiment, the lithium-containing compound which is brought in an oxidized state by the initial charge is not substantially reduced. The ratio of the capacity of the lithium-containing compound in the initial discharge to the capacity of the lithium-containing compound in the initial charge is 20% or less (for example, 20% or less, 15% or less, 10% or less, 5% or less, 1% or less, or 0%).

The term "charge and discharge potential range of the positive electrode active material" as used herein means a potential range in which the oxidation reaction and the reduction reaction of the positive electrode active material contained in the positive electrode are performed. A specific value depends on the type of the positive electrode active material, but the value is typically, 2.5 V or more, 2.7 V or more, 3.0 V or more, 3.2 V or more, or 3.5 V or more and is 4.6 V or less, 4.5 V or less, 4.4 V or less, 4.3 V or less, or 4.2 V or less, 4.1 V or less, or 4.0 V or less, each based on an Li/Li⁺ reference electrode. A representative range of the charge and discharge potential range of the positive electrode active material is 3.0 V or more and 4.2 V or less (vs. Li/Li⁺ reference electrode) and the upper limit value and lower limit value may be replaced independently by any of the numerical values mentioned above.

The charge and discharge potential range of the positive electrode active material relative to the Li/Li⁺ reference electrode described above may be determined referring to the operating voltage range of the lithium secondary battery. For example, when the operating voltage of the lithium secondary battery is 3.0 V or more and 4.2 V or less, the charge and discharge potential range of the positive electrode active material relative to the Li/Li⁺ reference electrode can be estimated at 3.0 V or more and 4.2 V or less.

That is, in other words, the lithium-containing compound represented by Li₆MnₓCo₁₋ₓO₄ (0 < x < 1) can cause an oxidation reaction in the operating voltage range of the lithium secondary battery, while the lithium-containing compound does not substantially cause a reduction reaction. Typically, there is a tendency that the lithium-containing compound represented by Li₆MnₓCo₁₋ₓO₄ (0 < x < 1) mainly causes an oxidation reaction on the higher voltage side than the operating voltage range of the lithium secondary battery.

The positive electrode of the present embodiment may contain a component other than the positive electrode active material and the lithium-containing compound represented by Li₆MnₓCo₁₋ₓO₄ (0 < x < 1). Such a component is not particularly limited, and examples thereof include a positive-electrode sacrificial agent other than the lithium-containing compound represented by Li₆MnₓCo₁₋ₓO₄ (0 < x < 1), a conductive additive, a binder, and an electrolyte.

The positive-electrode sacrificial agent other than the lithium-containing compound represented by Li₆MnₓCo₁₋ₓO₄ (0 < x < 1) is not particularly limited, and examples thereof include lithium oxides such as Li₂O₂; lithium nitrides such as LisN; lithium sulfide-based solid solutions such as Li₂S-P₂S₅, Li₂S-LiCl, Li₂S-LiBr, and Li₂S-Lil; iron-based lithium oxides such as Li₁₊ₓ(Ti_{1-y}Fe_{y})₁₋ₓO₂ (0 < x ≤ 0.25, 0.4 < y ≤ 0.9), Li₂₋ₓTi_{1-z}Fe_{z}O_{3-y} (0 ≤ x < 2, 0 ≤ y ≤ 1, 0.05≤ z ≤ 0.95), and Li₅FeO₄, and the like. One or two or more of the positive-electrode sacrificial agents other than the lithium-containing compound may be used either singly or in combination.

The conductive additive is not particularly limited and examples thereof include carbon black, single wall carbon nanotube (SWCNT), multi-wall carbon nanotube (MWCNT), carbon nanofiber (CF), and acetylene black.

The binder is not particularly limited and examples thereof include polyvinylidene fluoride, polytetrafluoroethylene, styrene butadiene rubber, acrylic resins, and polyimide resins. One or two or more of each of the conductive additives and binders as described above may be used either singly or in combination.

Examples of the electrolyte that can be contained in the positive electrode of the present embodiment include a polymer electrolyte, a gel electrolyte, an inorganic solid electrolyte, and the like, and a polymer electrolyte or a gel electrolyte is typically used. As the polymer electrolyte and the gel electrolyte, those described later can be used. One or two or more of the electrolytes may be used either singly or in combination.

The content of each component in the positive electrode of the present embodiment is not particularly limited. The content of each component in the positive electrode can be changed depending on the charge state of the battery, but can be defined by, for example, a blending ratio of each component at the time of manufacturing. Alternatively, the content may be defined by the content of each component in a discharge state (at the end of the discharge).

At the time of manufacturing the positive electrode of the present embodiment, the total blending amount of the positive electrode active material and the lithium-containing compound represented by Li₆MnₓCo₁₋ₓO₄ (0 < x < 1) may be, for example, 50% by mass or more and 100% by mass or less, or 70% by mass or more and 99% by mass or less relative to the total mass of the positive electrode. The total blending amount of the positive electrode active material and the lithium-containing compound is preferably 60% by mass or more, more preferably 70% by mass or more, still more preferably 80% by mass or more, and even still more preferably 90% by mass or more relative to the total mass of the positive electrode. The total blending amount of the positive electrode active material and the lithium-containing compound is preferably 99% by mass or less, and more preferably 98% by mass or less relative to the total mass of the positive electrode.

The total content of the positive electrode active material and the lithium-containing compound represented by Li₆MnₓCo₁₋ₓO₄ (0 < x < 1) at the end of the discharge of the lithium secondary battery of the present embodiment may be, for example, 50% by mass or more and 100% by mass or less, or 70% by mass or more and 99% by mass or less relative to the total mass of the positive electrode. The total content of the positive electrode active material and the lithium-containing compound is preferably 60% by mass or more, more preferably 70% by mass or more, still more preferably 80% by mass or more, and even still more preferably 90% by mass or more relative to the total mass of the positive electrode. The total content of the positive electrode active material and the lithium-containing compound is preferably 99% by mass or less, and more preferably 98% by mass or less relative to the total mass of the positive electrode.

At the time of manufacturing the positive electrode of the present embodiment, the blending amount of the lithium-containing compound represented by Li₆MnₓCo₁₋ₓO₄ (0 < x < 1) may be, for example, 1.0% by mass or more and 15% by mass or less relative to the total mass of the positive electrode. The content of the lithium-containing compound is preferably 1.0% by mass or more, more preferably 2.0% by mass or more, and still more preferably 3.0% by mass or more relative to the total mass of the positive electrode. The content of the lithium-containing compound is preferably 15% by mass or less, more preferably 12% by mass or less, and still more preferably 10% by mass or less relative to the total mass of the positive electrode, and may be 8.0% by mass or less or 5.0% by mass or less.

At least a part of the lithium-containing compound represented by Li₆MnₓCo₁₋ₓO₄ (0 < x < 1) releases lithium ions and electrons to be in an oxidized state by the initial charge of the battery. However, the sum of the lithium-containing compound represented by Li₆MnₓCo₁₋ₓO₄ (0 < x < 1) inside the battery in the oxidized state and the reduced state is constant before and after the initial charge and is constant regardless of the charge state of the battery.

Therefore, the total content of the lithium-containing compound represented by Li₆MnₓCo₁₋ₓO₄ (0 < x < 1) in the oxidized state and the reduced state may be, for example, 1.0% by mass or more and 15% by mass or less relative to the total mass of the positive electrode. The total content of the lithium-containing compound in the oxidized state and the reduced state is preferably 1.0% by mass or more, more preferably 2.0% by mass or more, and still more preferably 3.0% by mass or more relative to the total mass of the positive electrode. The total content of the lithium-containing compound in the oxidized state and the reduced state is preferably 15% by mass or less, more preferably 12% by mass or less, and still more preferably 10% by mass or less relative to the total mass of the positive electrode, and may be 8.0% by mass or less or 5.0% by mass or less.

The total content of the lithium-containing compound represented by Li₆MnₓCo₁₋ₓO₄ (0 < x < 1) in the oxidized state and the reduced state is equal to the blending amount of the lithium-containing compound at the time of manufacturing the positive electrode. Further, after sweeping the battery to a lower voltage (for example, about 1.0 V) than the voltage range in a normal charge and discharge cycle and returning the lithium-containing compound to a reduced state represented by Li₆MnₓCo₁₋ₓO₄ (0 < x < 1), the total content of the lithium-containing compound in the oxidized state and the reduced state can be calculated by measuring the content of Li₆MnₓCo₁₋ₓO₄ by a conventionally known method.

The content of the positive electrode active material and the lithium-containing compound represented by Li₆MnₓCo₁₋ₓO₄ (0 < x < 1) in the positive electrode can be measured by, for example, a method of comparing the relative intensities of the peaks in the X-ray diffraction measurement (XRD) or the Rietveld method.

Regarding the conductive additive, the blending amount at the time of manufacturing the positive electrode of the present embodiment and the content at the end of discharge of the battery may be, for example, 0.5% by mass or more and 30% by mass or less, 1.0% by mass or more and 20% by mass or less, or 1.5% by mass or more and 10% by mass or less relative to the total mass of the positive electrode.

Regarding the binder, the blending amount at the time of manufacturing the positive electrode of the present embodiment and the content at the end of discharge of the battery may be, for example, 0.5% by mass or more and 30% by mass or less, 1.0% by mass or more and 20% by mass or less, or 1.5% by mass or more and 10% by mass or less relative to the total mass of the positive electrode.

Regarding the electrolyte, the blending amount at the time of manufacturing the positive electrode of the present embodiment and the content at the end of discharge of the battery may be, for example, 0.5% by mass or more and 30% by mass or less, 1.0% by mass or more and 20% by mass or less, or 1.5% by mass or more and 10% by mass or less relative to the total mass of the positive electrode.

Regarding the positive-electrode sacrificial agent other than the lithium-containing compound represented by Li₆MnₓCo₁₋ₓO₄ (0 < x < 1), the blending amount at the time of manufacturing the positive electrode of the present embodiment may be, for example, 0.5% by mass or more and 30% by mass or less, 1.0% by mass or more and 20% by mass or less, or 1.5% by mass or more and 10% by mass or less relative to the total mass of the positive electrode.

The average thickness of the positive electrode in the present embodiment is, for example, 10 µm or more and 300 µm or less, and is preferably 30 µm or more and 200 µm or less, or 50 µm or more and 150 µm or less. However, the average thickness of the positive electrode can be appropriately adjusted according to the desired capacity of the battery.

### (Positive Electrode Current Collector)

The positive electrode current collector 140 is formed on one side of the positive electrode 110. The positive electrode current collector of the present embodiment is not particularly limited as long as it is a conductor that does not react with lithium ions in the battery. Examples of such a positive electrode current collector include aluminum.

The average thickness of the positive electrode current collector of the present embodiment is preferably 4 µm or more and 20 µm or less, more preferably 5 µm or more and 18 µm or less, and still more preferably 6 µm or more and 15 µm or less. In such a mode, since the occupation volume of the positive electrode current collector in the lithium secondary battery is decreased, the lithium secondary battery has a more improved energy density.

### (Separator)

The separator of the present embodiment is a member for ensuring the ionic conductivity of a lithium ion, which is a charge carrier, between the positive electrode and the negative electrode while preventing the battery from being short-circuited by separating the positive electrode and the negative electrode. That is, the separator 120 has a function of separating the positive electrode 110 and the negative electrode 130 and a function of ensuring the ionic conductivity of lithium ions. As such a separator, one member having two functions described above may be used singly, or two or more members having one function described above may be used in combination. The separator is not particularly limited as long as it has the above-described functions, and examples thereof include a porous member having an insulating property, a polymer electrolyte, a gel electrolyte, and an inorganic solid electrolyte. Typically, at least one selected from the group consisting of a porous member having an insulating property, a polymer electrolyte, and a gel electrolyte may be used.

In a case where the separator includes a porous member having an insulating property, the member exhibits ionic conductivity by filling the pores of the member with a material having ionic conductivity. Examples of the material to be filled include an electrolyte solution, a polymer electrolyte, and a gel electrolyte.

As the separator of the present embodiment, one or two or more of a porous member having an insulating property, a polymer electrolyte, and a gel electrolyte can be used either singly or in combination. However, when a porous member having an insulating property is used singly as the separator, the lithium secondary battery needs to further include an electrolyte solution to ensure ionic conductivity.

The material constituting the above-described porous member having an insulating property is not particularly limited, and examples thereof include an insulating polymer material. Specific examples thereof include polyethylene (PE) and polypropylene (PP). That is, the separator of the present embodiment may have a porous polyethylene (PE) film, a porous polypropylene (PP) film, or a laminated structure thereof.

The above-described polymer electrolyte is not particularly limited, and examples thereof include a solid polymer electrolyte that mainly contains a polymer and an electrolyte, and a semi-solid polymer electrolyte that mainly contains a polymer, an electrolyte, and a plasticizer.

The above-described gel electrolyte is not particularly limited, and examples thereof include those that mainly contain a polymer and a liquid electrolyte (that is, a solvent and an electrolyte).

The polymer that can be included in the polymer electrolyte and the gel electrolyte is not particularly limited. However, for example, a polymer containing a functional group including an oxygen atom such as ether and an ester, a halogen group, and a polar group such as a cyano group may be included. Specific examples include resins having an ethylene oxide unit in the main chain and/or a side chain such as polyethylene oxide (PEO), resins having a propylene oxide unit in the main chain and/or a side chain such as polypropylene oxide (PPO), acrylic resins, vinyl resins, ester resins, nylon resins, polyvinylidene fluoride (PVDF), polyacrylonitrile (PAN), polysiloxane, polyphosphazene, polymethyl methacrylate, polyamide, polyimides, aramid, polylactic acid, polyurethane, polyacetal, polysulfone, polyethylene carbonate, polypropylene carbonate, and polytetrafluoroethylene. One or two or more of the resins may be used either singly or in combination.

Examples of the ectrolytes included in the polymer electrolyte and the gel electrolyte include salts of Li, Na, K, Ca, or Mg. Typically, in the present embodiment, the polymer electrolyte and the gel electrolyte contain a lithium salt.

The lithium salt is not particularly limited, and examples thereof include Lil, LiCl, LiBr, LiF, LiBF₄, LiPF₆, LiAsF₆, LiSOsCFs, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNOs, and Li₂SO₄. Preferably, at least one selected from the group consisting of LiN(SO₂F)₂, LiN(SO₂CF₃)₂, and LiN(SO₂CF₃CF₃)₂ may be used. One or two or more of the salts or lithium salts may be used either singly or in combination.

The blending ratio of the polymer and the lithium salt in the polymer electrolyte and the gel electrolyte may be determined by the ratio of the polar group of the polymer to the lithium atom of the lithium salt. For example, in a case where the polymer has oxygen atoms, the polymer may be determined by the ratio ([Li]/[O]) of the number of oxygen atoms in the polymer to the number of lithium atoms in the lithium salt. The blending ratio of the polymer and the lithium salt to the resin in the polymer electrolyte and the gel electrolyte can be adjusted so that the ratio ([Li]/[O]) is 0.02 or more and 0.20 or less, 0.03 or more and 0.15 or less, or 0.04 or more and 0.12 or less.

The solvent contained in the gel electrolyte is not particularly limited. For example, one or two or more of the solvents that can be contained in the electrolyte solution described later can be used either singly or in combination. Examples of preferable solvents are the same as those in the electrolyte solution described later.

The plasticizer contained in the semi-solid polymer electrolyte is not particularly limited, and examples thereof include the same component as the solvent that can be contained in the gel electrolyte and various oligomers.

The separator of the present embodiment may be covered with a separator coating layer. The separator coating layer may cover both of the surfaces of the separator or may cover only one of the surfaces of the separator. The separator coating layer is not particularly limited as long as the member does not react with lithium ions. The separator coating layer preferably bonds the separator to the adjacent layer firmly. Such a separator coating layer is not particularly limited and examples include members containing a binder such as polyvinylidene fluoride (PVDF), a composite material (SBR-CMC) of styrene butadiene rubber and carboxymethyl cellulose, polyacrylic acid (PAA), lithium polyacrylate (Li-PAA), polyimide (PI), polyamideimide (PAI), or aramid. The separator coating layer may be obtained by adding, to the above-described binder, inorganic particles such as silica, alumina, titania, zirconia, magnesium oxide, magnesium hydroxide, and lithium nitrate.

The average thickness of the separator of the present embodiment is preferably 20 µm or less, more preferably 18 µm or less, and still more preferably 15 µm or less. In such a mode, since the occupation volume of the separator in the lithium secondary battery is decreased, the lithium secondary battery has a more improved energy density. In addition, the average thickness of the separator is preferably 5 µm or more, more preferably 7 µm or more, and still more preferably 10 µm or more. In such a mode, the positive electrode and the negative electrode can be more reliably separated, and a short circuit of the battery can be further suppressed.

### (Electrolyte Solution)

The lithium secondary battery 100 preferably further includes an electrolyte solution.

The electrolyte solution is a liquid containing a solvent and an electrolyte, and has ionic conductivity. The electrolyte solution may be rephrased as a liquid electrolyte and acts as a conductive path for lithium ions. Therefore, when the lithium secondary battery has the electrolyte solution, the internal resistance is further reduced, and there is a tendency that the energy density, capacity, and cycle characteristics are further improved.

The electrolyte solution may be infiltrated into the separator 120, and the electrolyte solution may be encapsulated together with the laminate of the negative electrode, the separator, the positive electrode, and the positive electrode current collector to obtain a finished product of the lithium secondary battery 100.

As the electrolyte contained in the electrolyte solution, an electrolyte that can be contained in the polymer electrolyte and the gel electrolyte, in particular, one or two or more of the lithium salts can be used either singly or in combination. The preferable lithium salts are the same as those in the polymer electrolyte and the gel electrolyte.

Examples of the solvent contained in the electrolyte solution include a non-aqueous solvent having a fluorine atom (hereinafter, referred to as a "fluorinated solvent") and a non-aqueous solvent having no fluorine atom (hereinafter, referred to as a "non-fluorine solvent").

The fluorinated solvent is not particularly limited, and examples thereof include 1,1,2,2-tetrafluoroethyl-2,2,3,3-tetrafluoropropyl ether, 1,1,2,2-tetrafluoroethyl-2,2,2-trifluoroethyl ether, 1H,1H,5H-octafluoropentyl-1,1,2,2-tetrafluoroethyl ether, and the like.

The non-fluorine solvent is not particularly limited, and examples thereof include triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, and 12-crown-4.

One or two or more of the fluorinated solvents and/or the non-fluorine solvents can be freely used either singly or in combination at any proportion. The contents of the fluorinated solvent and the non-fluorine solvent are not particularly limited, and the proportion of the fluorinated solvent in the total volume of the solvent may be 0% to 100% by volume, and the proportion of the non-fluorine solvent in the total volume of the solvent may be 0% to 100% by volume.

### (Use of Lithium Secondary Battery)

Fig. 2 shows one mode of the use of the lithium secondary battery of the present embodiment. The lithium secondary battery 100 has a positive electrode terminal 220 and a negative electrode terminal 210 for connecting the lithium secondary battery 100 to an external circuit and these terminals are bonded to the positive electrode current collector 140 and the negative electrode 130, respectively. The lithium secondary battery 100 is charged and discharged by connecting the negative electrode terminal 210 to one end of the external circuit and the positive electrode terminal 220 to the other end of the external circuit.

More specifically, when an external power supply is connected to the positive electrode terminal 220 and the negative electrode terminal 210 and a voltage is applied so that a current flows from the negative electrode terminal 210 (negative electrode 130) to the positive electrode terminal 220 (positive electrode 110) through the external power supply, the lithium secondary battery 100 is charged and a lithium metal is precipitated on the surface of the negative electrode. When the positive electrode terminal 220 and the negative electrode terminal 210 are connected to the charged lithium secondary battery 100 through a desired external circuit, the lithium secondary battery 100 is discharged. As a result, the precipitation of the lithium metal generated on the surface of the negative electrode is electrolytically dissolved.

As described above, the lithium-containing compound contained in the positive electrode of the present embodiment releases lithium ions under the condition in which the voltage of the battery is about 4.3 V. Therefore, the lithium secondary battery of the present embodiment is preferably used by the following method.

That is, the method for using the lithium secondary battery of the present embodiment includes performing a charge and discharge cycle including at least one discharging step and at least one charging step, after charging the battery at a cut-off voltage of 4.3 V or more and 5.0 V or less, and the charge and discharge cycle is performed such that the cut-off voltage in the charging step is lower than the cut-off voltage at the time of the first charge performed at a cut-off voltage of 4.3 V or more and 5.0 V or less.

According to such a using method, since the lithium secondary battery of the present embodiment is reliably charged at a cut-off voltage of 4.3 V or more and 5.0 V or less, the lithium-containing compound represented by Li₆MnₓCo₁₋ₓO₄ (0 < x < 1) effectively and reliably acts as the positive-electrode sacrificial agent. Further, in the charging step in the subsequent charge and discharge cycle, the decomposition of each constitution in the lithium secondary battery (particularly, in a case of containing a positive electrode active material and an electrolyte solution, the solvent in the electrolyte solution) can be effectively and reliably suppressed by setting the cut-off voltage to be lower than the cut-off voltage at the time of the first charge, and the cycle characteristics can be further improved.

In the method for using the lithium secondary battery of the present embodiment, the cut-off voltage in the first charge before performing the charge and discharge cycle is preferably more than 4.3 V, and more preferably 4.4 V, and may be 4.5 V or more, 4.6 V or more, or 4.7 V or more. The cut-off voltage is preferably less than 5.0 V, more preferably 4.9 V or less, still more preferably 4.8 V or less, and even still more preferably 4.7 V or less.

The cut-off voltage in the first charge may be within a range obtained by any combination of the upper limit value and the lower limit value, and may be, for example, more than 4.3 V and less than 5.0 V, 4.4 V or more and 4.9 V or less, or 4.4 V or more and 4.7 V or less. By setting the cut-off voltage in the first charge before performing the charge and discharge cycle to be within the above range, the cycle characteristics of the lithium secondary battery tend to be further improved.

The number of charge and discharge cycles performed after charging at a cut-off voltage of 4.3 V or more and 5.0 V or less is not particularly limited, and for example, the charge and discharge cycle may be repeated the until the discharge capacity becomes 80% or less, 70% or less, or 60% or less of the discharge capacity in the discharging step of the first charge and discharge cycle performed immediately after the first charge.

The charge and discharge cycle may be performed under any condition as long as the cut-off voltage in the charging step is lower than the cut-off voltage at the time of the first charge. The cut-off voltage in the charging step may be, for example, 0.1 V, 0.2 V, or 0.3 V lower than the cut-off voltage at the time of the first charge.

In addition, the above charge and discharge cycle is preferably performed within a voltage range in which the lithium-containing compound represented by Li₆MnₓCo₁₋ₓO₄ (0 < x < 1) does not cause a reduction reaction. That is, in the charge and discharge cycle, the cut-off voltage in the charging step is preferably lower than the cut-off voltage at the time of the first charge, and the charge and discharge cycle is performed within the voltage range in which the lithium-containing compound represented by Li₆MnₓCo₁₋ₓO₄ (0 < x < 1) does not cause a reduction reaction. The range of such a voltage is, for example, 2.5 V or more and 4.6 V or less, preferably 2.5 V or more and 4.3 V or less, and more preferably 3.0 V or more and 4.2 V or less.

The content described above as the method for using the lithium secondary battery of the present embodiment merely shows a preferable method for using the lithium secondary battery of the present embodiment, and does not limit the method for using the lithium secondary battery of the present embodiment. For example, in the initial charge of the lithium secondary battery of the present embodiment, the cut-off voltage may be out of the range of 4.3 V or more and 5.0 V or less, and the voltage range in the subsequent charge and discharge cycle may be equal to or higher than the cut-off voltage at the time of the first charge.

### (Method for Manufacturing Lithium Secondary Battery)

A method for manufacturing the lithium secondary battery 100 as shown in Fig. 1 is not particularly limited as long as it can provide a lithium secondary battery equipped with the above-described constitution and examples of the method include the method as follows. The lithium secondary battery of the present embodiment, particularly the positive electrode of the present embodiment, is preferably manufactured in an environment where humidity is removed to a certain extent, for example, in a dry room with a dew point of -50°C to -10°C or the like.

The positive electrode 110 is formed on the positive electrode current collector 140, for example, in the following manner. In addition to the positive electrode active material and the lithium-containing compound represented by Li₆MnₓCo₁₋ₓO₄ (0 < x < 1) described above, optionally, a positive-electrode sacrificial agent other than the lithium-containing compound represented by Li₆MnₓCo₁₋ₓO₄ (0 < x < 1), a conductive additive, a binder, and/or an electrolyte are mixed to obtain a positive electrode mixture. The blending ratio may be appropriately adjusted so that each component is within the above-described range.

The positive electrode mixture thus obtained is applied to one of the surfaces of a metal foil (for example, Al foil) serving as a positive electrode current collector and having a predetermined thickness (for example, 5 µm or more and 1 mm or less), followed by press molding. The molded product thus obtained is punched into a predetermined size by punching to obtain a positive electrode 110.

The lithium-containing compound represented by Li₆MnₓCo₁₋ₓO₄ (0 < x < 1) can be produced by calcining a mixture obtained by pulverizing and mixing powders of Li₂O, MnO, and CoO under the conditions at, for example, 600°C to 1000°C for 5 to 100 hours. The atmospheric conditions at the time of calcination are preferably an inert gas atmosphere such as argon and nitrogen gas, and may further contain a trace amount of hydrogen gas. The proportion of the hydrogen gas can be, for example, 0.1% to 10% by volume.

As the powders of Li₂O, MnO, and CoO, commercially available powders may be used, and the mixing ratio (molar ratio) thereof is preferably set to Li₂O:(MnO, CoO) = 3:1. In addition, the blending ratio of MnO and CoO can be appropriately adjusted to control the value x in Li₆MnₓCo₁₋ₓO₄.

Alternatively, the lithium-containing compound represented by Li₆MnₓCo₁₋ₓO₄ (0 < x < 1) may be produced by a coprecipitation method.

Next, a separator 120 having the above-described constitution is prepared. The separator 120 may be manufactured by a conventionally known method or a commercially available separator may be used.

Next, the above-described negative electrode material, for example, a metal foil (such as an electrolytic Cu foil) having a thickness of 1 µm or more and 1 mm or less is washed with a sulfamic-acid-containing solvent, punched into a predetermined size, ultrasonically washed with ethanol, and then dried to obtain a negative electrode 130.

The laminate is obtained by laminating the positive electrode 110, the separator 120, and the negative electrode 130, which include the positive electrode current collector 140 on one surface, obtained as described above, in this order. The laminate thus obtained is encapsulated, together with the electrolyte solution in a hermetically sealed container to obtain a lithium secondary battery 100. The hermetically sealed container is not particularly limited and examples include a laminate film.

The lithium secondary battery 100 obtained as described above is used after the initial charge. The initial charge may be performed before the battery is provided to the user, or may be performed by the user after the battery is provided to the user. From the viewpoint of effectively and reliably achieving the effect of the lithium secondary battery of the present embodiment, the initial charge is preferably performed before the battery is provided to the user. That is, the method for manufacturing the lithium secondary battery of the present embodiment preferably includes a step of initially charging the battery as one step of the manufacturing steps.

Therefore, the method for manufacturing the lithium secondary battery 100 preferably includes a step of initially charging the battery obtained as described above.

The initial charge may be CC charge (constant current charge) or CV charge (low voltage charge), or may be CC-CV charge, CV-CC charge, or CC-CV-CC charge. In addition, the initial charge is preferably performed under the charging condition in which the cut-off voltage is 4.3 V or more and 5.0 V or less.

In the initial charge described above, the cut-off voltage is preferably more than 4.3 V, and more preferably 4.4 V or more, and may be 4.5 V or more, 4.6 V or more, or 4.7 V or more. The cut-off voltage is preferably less than 5.0 V, more preferably 4.9 V or less, still more preferably 4.8 V or less, and even still more preferably 4.7 V or less.

The cut-off voltage in the initial charge may be within a range obtained by any combination of the above upper limit value and the above lower limit value, and is, for example, more than 4.3 V and less than 5.0 V, 4.4 V or more and 4.9 V or less, or 4.4 V or more and 4.7 V or less. By setting the cut-off voltage DC in the initial charge before performing the charge and discharge cycle to be within the above range, there is a tendency that the cycle characteristics of the manufactured lithium secondary battery can be further improved.

### [Second Embodiment]

### (Lithium Secondary Battery)

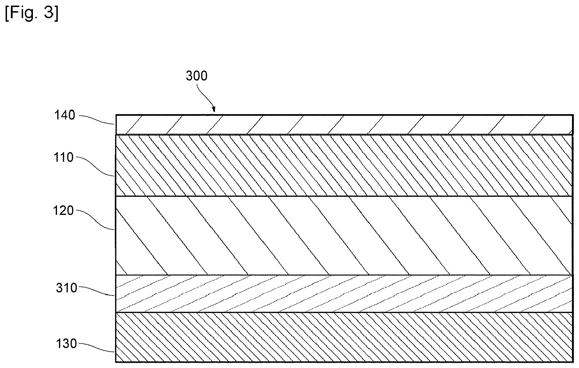

Fig. 3 is a schematic cross-sectional view of a lithium secondary battery according to a second embodiment (hereinafter, referred to as "second embodiment"). A lithium secondary battery 300 of the second embodiment includes a positive electrode 110 and a negative electrode 130 which does not have the negative electrode active material, similar to the lithium secondary battery 100 of the first embodiment. The positive electrode 110 contains a positive electrode active material and a lithium-containing compound represented by Li₆MnₓCo₁₋ₓO₄ (0 < x < 1). In addition, the lithium secondary battery 100 includes a separator 120 between the positive electrode 110 and the negative electrode 130, and the positive electrode 110 has a positive electrode current collector 140 on the surface on the opposite side of the surface facing the separator 120.

The lithium secondary battery 300 of the second embodiment includes a fibrous or porous buffering function layer 310 having ionic conductivity and electrical conductivity formed on the surface of the separator 120 which faces the negative electrode 130, which is different from the lithium secondary battery 100.

In the lithium secondary battery 300, the respective constitutions and preferred modes of the positive electrode current collector, the positive electrode, the separator, and the negative electrode are similar to those of the lithium secondary battery 100 of the first embodiment, and regarding these constitutions, the lithium secondary battery of the second embodiment exhibits the same effects as the lithium secondary battery of the first embodiment. In addition, the lithium secondary battery of the second embodiment may contain the electrolyte solution as described above similar to the lithium secondary battery 100.

### (Buffering Function Layer)

As shown in Fig. 3, the buffering function layer 310 is formed on the surface of the separator 120 facing the negative electrode 130. The buffering function layer is fibrous or porous and has ionic conductivity and electrical conductivity. Here, since the buffering function layer 310 is fibrous or porous, the buffering function layer has a solid portion having ionic conductivity and electrical conductivity and a pore portion composed of spaces between the solid portions (the same meaning as a "gap portion", hereinafter, the same applies in the present specification). The term "solid portion" in the buffering function layer as used in the present specification includes a gel-like portion.

Since the buffering function layer 310 is configured as described above, when the lithium secondary battery is charged, electrons from the negative electrode and lithium ions from the separator and/or the electrolyte solution are supplied to the solid portion. As a result, on the surface of the solid portion, the electrons and the lithium ions supplied as described above react with each other, and a lithium metal is precipitated on the pore portion (the surface of the solid portion). Therefore, the buffering function layer 310 exhibits an effect of suppressing the volume expansion of the battery due to the lithium metal precipitation when the battery is charged. That is, the lithium secondary battery 300 is capable of further suppressing the volume expansion or the volume change caused by charge and discharge as compared with the lithium secondary battery 100.

The present inventors have found that the cycle characteristics of the lithium secondary battery of the present embodiment are not deteriorated even when the buffering function layer is introduced as in the lithium secondary battery of the second embodiment, and the cycle characteristics of the battery can be rather improved. The present inventors speculate that the reason for this is that, due to the introduction of the buffering function layer, the surface area of a field where the lithium metal can be precipitated increases, the reaction rate of the lithium metal precipitation reaction is slowly controlled, and the formation of lithium metal grown in a dendrite shape is more reliably suppressed.

In the second embodiment, the expression "the lithium metal is precipitated on the negative electrode" means that unless otherwise specified, the lithium metal is precipitated on at least one of the surface of the negative electrode and the surface of the solid portion of the buffering function layer. Therefore, in the lithium secondary battery of the second embodiment, the lithium metal may be precipitated on the surface of the negative electrode (the interface between the negative electrode and the buffering function layer) or on the inside of the buffering function layer (the surface of the solid portion of the buffering function layer).

The buffering function layer 310 is not particularly limited as long as the layer is fibrous or porous and has ionic conductivity and electrical conductivity. Non-limiting examples of the buffering function layer 310 include those obtained by covering all or part of the surface of a fibrous or porous ionically conductive layer with an electrically conductive layer, those obtained by covering all or part of the surface of a fibrous or porous electrically conductive layer with an ionically conductive layer, and those obtained by entwining a fibrous ionically conductive layer and a fibrous electrically conductive layer.

The ionically conductive layer is not limited as long as the layer can conduct ions, and examples thereof include the polymer electrolyte and the gel electrolyte shown as examples of the electrolyte in the separator of the lithium secondary battery of the first embodiment.

The electrically conductive layer is not limited as long as the layer can conduct electrons and examples thereof include a metal film. Non-limiting examples of the metal which may be contained in the electrically conductive layer include SUS, Si, Sn, Sb, Al, Ni, Cu, Sn, Bi, Ag, Au, Pt, Pb, Zn, In, Bi-Sn, In-Sn, and the like. As the metal to be contained in the electrically conductive layer is preferably Si, Sn, Zn, Bi, Ag, In, Pb, Sb, or Al from the viewpoint of enhancing affinity with the lithium metal. One or two or more of the metals may be used either singly or in combination.

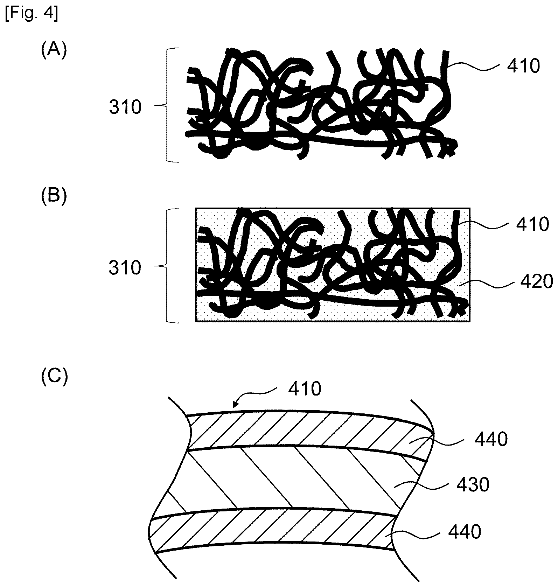

One embodiment of the buffering function layer 310 is a fibrous buffering function layer. Fig. 4A is a schematic cross-sectional view of a fibrous buffering function layer. The buffering function layer 310 shown in Fig. 4A is composed of an ionically and electrically conductive fiber 410 which is a fiber having ionic conductivity and electrical conductivity. In other words, the term "the buffering function layer is fibrous" in the present embodiment means that the buffering function layer contains a fiber or is composed of a fiber so that the layer has solid portions and pore portions composed of the spaces between the solid portions.

When the lithium secondary battery having the buffering function layer 310 as shown in Fig. 4A is charged, a lithium metal is precipitated on the surface of the solid portion of the buffering function layer, that is, on the surface of the ionically and electrically conductive fiber 410. In such a mode, therefore, as shown by its schematic cross-sectional view in Fig. 4B, a lithium metal 420 is precipitated on the surface of the ionically and electrically conductive fiber 410, which is a solid portion of the buffering function layer, to fill the pore portion of the buffering function layer with the lithium metal.

Fig. 4C is a schematic cross-sectional view showing one embodiment of the ionically and electrically conductive fiber 410. As shown in Fig. 4C, in this embodiment, the ionically and electrically conductive fiber 410 has a fibrous ionically conductive layer 430 and an electrically conductive layer 440 which covers the surface of the ionically conductive layer 430 therewith. The ionically conductive layer 430 may have, for example, the constitution as described above as the ionically conductive layer, and the electrically conductive layer 440 may have, for example, the constitution as described above as the electrically conductive layer.

The fibrous ionically conductive layer 430 has an average fiber diameter of preferably 30 nm or more and 5000 nm or less, more preferably 50 nm or more and 2000 nm or less, still more preferably 70 nm or more and 1000 nm or less, and even still more preferably 80 nm or more and 500 nm or less. When the average fiber diameter of the ionically conductive layer falls within the above range, the surface area of a reaction site on which the lithium metal is precipitated is in a more appropriate range and the resulting lithium secondary battery therefore tends to have more improved cycle characteristics.

The average thickness of the electrically conductive layer 440 is preferably 1 nm or more and 300 nm or less, more preferably 5 nm or more and 200 nm or less, and still more preferably 10 nm or more and 150 nm or less. The electrically conductive layer having an average thickness within the above range can more appropriately keep the electrical conductivity of the ionically and electrically conductive fiber 410 and therefore, the resulting lithium secondary battery tends to have more improved cycle characteristics.

In another embodiment, the buffering function layer 310 may be porous. The porous buffering function layer may have, for example, a porous ionically conductive layer, particularly, an ionically conductive layer having a continuous pore and an electrically conductive layer which covers the surface of the ionically conductive layer.

Since the buffering function layer 310 is fibrous or porous and accordingly, the buffering function layer has pores. The porosity of the buffering function layer is not particularly limited and the porosity is preferably 50% or more, more preferably 60% or more, and still more preferably 70% or more in terms of % by volume. When the buffering function layer has a porosity in the above range, the surface area of a reaction site where the lithium metal can be precipitated shows a further increase, so that the resulting lithium secondary battery tends to have further improved cycle characteristics. In such a mode, there is a tendency that an effect of more effectively and reliably suppressing the cell volume expansion is exhibited. The porosity of the buffering function layer is not particularly limited and the porosity may be 99% or less, 95% or less, or 90% or less in terms of % by volume.

The average thickness of the buffering function layer 310 is preferably 100 µm or less, more preferably 50 µm or less, and still more preferably 30 µm or less. When the buffering function layer has an average thickness within the above range, an occupation volume of the buffering function layer 310 in the lithium secondary battery 300 is decreased and the resulting battery has a more improved energy density. In addition, the average thickness of the buffering function layer is preferably 1 µm or more, more preferably 4 µm or more, and still more preferably 7 µm or more. When the buffering function layer has an average thickness within the above range, the surface area of a reaction site in which a lithium metal can be precipitated shows a further increase so that the resulting battery tends to have more improved cycle characteristics. In such a mode, there is a tendency that an effect of more effectively and reliably suppressing the cell volume expansion is exhibited.

The fiber diameter of the fibrous ionically conductive layer, the thickness of the electrically conductive layer, the porosity of the buffering function layer, and the thickness of the buffering function layer can be measured by known measurement methods. For example, the thickness of the buffering function layer can be measured by etching the surface of the buffering function layer by focused ion beam (FIB) to expose the section thereof and observing the thickness of the buffering function layer at the exposed section with an electron microscope.

The fiber diameter of the fibrous ionically conductive layer, the thickness of the electrically conductive layer, and the porosity of the buffering function layer can be measured by observing the surface of the buffering function layer with an electron microscope. The porosity of the buffering function layer may be calculated by subjecting the observed image of the surface of the buffering function layer to binary analysis with an image analysis software and finding a proportion of the buffering function layer in the total area of the image.

The above measurement values are each calculated by finding the average of the values measured three times or more, preferably 10 times or more.

When the buffering function layer 310 contains a metal reactive with lithium, the total capacity of the negative electrode 130 and the buffering function layer 310 is sufficiently small relative to the capacity of the positive electrode 110 and for example, the total capacity may be 20% or less, 15% or less, 10% or less, or 5% or less. The capacity of each of the positive electrode 110, the negative electrode 130, and the buffering function layer 310 can be measured by a conventionally known method.

### (Method for Manufacturing Lithium Secondary Battery)

In the method for manufacturing the lithium secondary battery of the second embodiment, the manufacturing of the constitutions other than the buffering function layer, the assembly of each constitution, and the subsequent initial charge are performed in the same manner as in the method for manufacturing the lithium secondary battery of the first embodiment.

The method for manufacturing the buffering function layer 310 is not particularly limited insofar as it can provide a fibrous or porous layer having ionic conductivity and electrical conductivity and for example, the method may be performed as follows.

A fibrous buffering function layer, which is one as shown in Fig. 4C, having an ionically and electrically conductive fiber 410 including a fibrous ionically conductive layer 430 and an electrically conductive layer 440 covering the surface of the ionically conductive layer 430 can be manufactured as follows.

First, a solution obtained by dissolving the above resin (for example, PVDF) in an appropriate organic solvent (for example, N-methylpyrrolidone) is applied with a doctor blade onto the surface of the separator 120 prepared in advance. The separator 120 having the resin solution applied thereto is immersed in a water bath and then dried sufficiently at room temperature to form a fibrous ionically conductive layer on the separator 120 (the ionically conductive layer may be allowed to exhibit its ionically conductive function, for example, by pouring an electrolyte solution at the time of the assembly of the battery). Then, an appropriate metal (for example, Ni) is deposited under vacuum conditions on the separator having the fibrous ionically conductive layer formed thereon to obtain a fibrous buffering function layer.

The porous buffering function layer having a porous ionically conductive layer and an electrically conductive layer which covers the surface of the ionically conductive layer can also be manufactured as follows.

First, by using a solution obtained by dissolving the above resin (for example, PVDF) in an appropriate solvent (for example, N-methylpyrrolidone), a porous ionically conductive layer having a continuous pore is formed on the surface of the separator 120 by a conventionally known method (for example, a method using phase separation from a solvent, a method using a foaming agent, or the like) (the ionically conductive layer may be allowed to exhibit its ionically conductive function, for example, by pouring an electrolyte solution at the time of the assembly of the battery). Then, by depositing an appropriate metal (for example, Ni), under vacuum conditions, on the separator having the porous ionically conductive layer formed thereon, a porous buffering function layer can be obtained.

### [Method for Manufacturing Lithium Secondary Battery]

The present invention also provides a method for manufacturing a lithium secondary battery. Hereinafter, the method for manufacturing the lithium secondary battery of the present embodiment (hereinafter, referred to as "manufacturing method of the present embodiment") will be described in detail.

The manufacturing method of the present embodiment includes a step of preparing a positive electrode containing a positive electrode active material and a lithium-containing compound represented by Li₆MnₓCo₁₋ₓO₄ (0 < x < 1), and a negative electrode which does not have a negative electrode active material, a step of arranging the positive electrode and the negative electrode so as to face each other, and a step of applying a voltage between the positive electrode and the negative electrode to initially charge the battery under a charging condition in which a cut-off voltage is 4.3 V or more and 5.0 V or less.

As described above, the lithium-containing compound represented by Li₆MnₓCo₁₋ₓO₄ (0 < x < 1) tends to start to release lithium ions under the condition in which the voltage of the battery reaches about 4.3 V during the initial charge and to act as a positive-electrode sacrificial agent. Therefore, according to the manufacturing method of the present embodiment including the step of initially charging the battery under the charging condition in which the cut-off voltage is 4.3 V or more and 5.0 V or less, the lithium-containing compound represented by Li₆MnₓCo₁₋ₓO₄ (0 < x < 1) can effectively and reliably exhibit the function as the positive-electrode sacrificial agent, and a lithium secondary battery having excellent cycle characteristics can be manufactured. Further, the lithium-containing compound represented by Li₆MnₓCo₁₋ₓO₄ (0 < x < 1) has excellent stability in the atmosphere and can be handled without strictly controlling humidity and the like. Therefore, the above manufacturing method has high productivity.

Hereinafter, each step will be described. The manufacturing method of the present embodiment, particularly a positive electrode preparation step, is preferably performed in an environment where humidity is removed to a certain extent, for example, in a dry room with a dew point of -50°C to -10°C.

### (Positive Electrode and Negative Electrode Preparation Step)

In the manufacturing method of the present embodiment, first, a step of preparing a positive electrode containing a positive electrode active material and a lithium-containing compound represented by Li₆MnₓCo₁₋ₓO₄ (0 < x < 1), and a negative electrode which does not have a negative electrode active material is performed.

The respective constitutions and preferred modes of the positive electrode and the negative electrode are the same as those in the lithium secondary battery of the present embodiment. In addition, the reflective constitutions and preferred modes of the positive electrode active material and the lithium-containing compound represented by Li₆MnₓCo₁₋ₓO₄ (0 < x < 1) contained in the positive electrode are the same as those in the lithium secondary battery of the present embodiment.

In this step, the positive electrode and the negative electrode having such constitutions are prepared. However, the positive electrode and the negative electrode may be obtained by purchase of commercially available ones, and may be manufactured by the method described in the description of the lithium secondary battery of the present embodiment. In addition, the positive electrode and the negative electrode may be prepared at the same time or separately. When the positive electrode and the negative electrode are prepared separately, the order thereof is not particularly limited.

### (Positive Electrode and Negative Electrode Arrangement Step)

In the manufacturing method of the present embodiment, after the positive electrode and negative electrode preparation step, a step of arranging the positive electrode and the negative electrode so as to face each other is performed.

In this step, the arrangement of the positive electrode and the negative electrode is not particularly limited as long as the positive electrode and the negative electrode are arranged so as to face each other. Only the positive electrode and the negative electrode may be arranged, and the positive electrode and the negative electrode may be arranged to face each other with the separator and/or the buffering function layer interposed therebetween as in the lithium secondary batteries 100 and 300 described above. However, the positive electrode and the negative electrode do not come into physical or electrical contact with each other.

In the positive electrode and negative electrode arrangement step, a plurality of sets of combinations of the positive electrode and the negative electrode may be arranged. In that case, it is preferable to arrange the positive electrode and the negative electrode so as to be alternately laminated.

In a case where the separator and/or the buffering function layer is arranged, the constitutions and preferred modes of the separator and the buffering function layer are the same as those in the lithium secondary battery of the present embodiment, and the separator and the buffering function layer can be obtained or manufactured by the method described in the description of the lithium secondary battery of this embodiment.

### (Initial Charging Step)

In the manufacturing method of the present embodiment, after the positive electrode and negative electrode arrangement step, a step of applying a voltage between the positive electrode and the negative electrode to initially charge the battery under the charging condition in which the cut-off voltage is 4.3 V or more and 5.0 V or less is performed.

The initial charge may be CC charge (constant current charge) or CV charge (low voltage charge), or may be CC-CV charge, CV-CC charge, or CC-CV-CC charge.

In the initial charging step, the cut-off voltage is preferably more than 4.3 V, and more preferably 4.4 V or more, and may be 4.5 V or more, 4.6 V or more, or 4.7 V or more. The cut-off voltage is preferably less than 5.0 V, more preferably 4.9 V or less, still more preferably 4.8 V or less, and even still more preferably 4.7 V or less.

The cut-off voltage in the initial charge may be within a range obtained by any combination of the above upper limit value and the above lower limit value, and is, for example, more than 4.3 V and less than 5.0 V, 4.4 V or more and 4.9 V or less, or 4.4 V or more and 4.7 V or less. By setting the cut-off voltage to be within the above range, there is a tendency that a lithium secondary battery having more excellent cycles can be manufactured.

### (Other Steps)

The manufacturing method of the present embodiment may include steps other than the positive electrode and negative electrode preparation step, the positive electrode and negative electrode arrangement step, and the initial charging step. Examples of such steps include a separator preparation step that is performed as necessary before the positive electrode and negative electrode arrangement step, a buffering function layer preparation step, an electrolyte solution injection step that is performed as necessary between the positive electrode and negative electrode arrangement step and the initial charging step, and a subsequent sealing step. These steps can be performed based on the matters described in the description of the lithium secondary battery of the first embodiment or the second embodiment.

Specifically, the electrolyte solution injection step and the subsequent sealing step may be performed as follows. First, a laminate including the positive electrode and the negative electrode obtained in the positive electrode and negative electrode arrangement step is retained in a hermetically sealed container having at least one end opened. Then, the electrolyte solution injection step is performed by injecting an electrolyte solution that can be contained in the lithium secondary battery of the present embodiment into the hermetically sealed container. Next, a sealing step of sealing the opening portion of the hermetically sealed container to obtain the battery as a product is performed.

### [Modification Examples]

The embodiments described above are provided merely to explain the present invention and are not intended to limit the present invention to the embodiments. Various modifications are possible without departing from the scope and spirit of the present invention.

The lithium secondary battery of the present embodiment may or may not have a current collector which is to be arranged on the surface of the negative electrode so as to come into contact with the negative electrode. Such a current collector is not particularly limited and examples include those usable as a negative electrode material. In addition, the lithium secondary battery of the present embodiment may not have a positive electrode current collector. When the lithium secondary battery has neither a positive electrode current collector nor a negative electrode current collector, the positive electrode and the negative electrode themselves serve as current collectors, respectively.

The lithium secondary battery of the present embodiment may have a terminal for connecting the electrode to an external circuit at the positive electrode current collector and/or the negative electrode. For example, a metal terminal (for example, Al, Ni, or the like) having a length of 10 µm or more and 1 mm or less may be bonded to one or both of the positive electrode current collector and the negative electrode. As a bonding method, a conventionally known method may be used and for example, ultrasonic welding may be used.

In the lithium secondary battery 100, the separator 120 may be omitted. In that case, it is preferable to fix the positive electrode 110 and the negative electrode 130 in a state of being sufficiently separated from each other so that the positive electrode and the negative electrode do not come into physical or electrical contact with each other.

In the buffering function layer 310 included in the lithium secondary battery 300, the ionically conductive layer and the electrically conductive layer are not limited to a layered layer, and may be a fiber, a lump, or a porous layer. Therefore, in the present specification, the terms "ionically conductive layer" and "electrically conductive layer" may be rephrased as an ionically conductive phase and an electrically conductive phase, respectively.

The term "high energy density" or "have a high energy density" as used in the present specification means that the capacity of the battery per total volume or total mass is high. The capacity is preferably 700 Wh/L or more or 300 Wh/kg or more, more preferably 800 Wh/L or more or 350 Wh/kg or more, and still more preferably 900 Wh/L or more or 400 Wh/kg or more.

In the present specification, the term "excellent cycle characteristics" means that the rate of decrease in battery capacity is low before and after the number of charge and discharge cycles that can be expected during normal use. Described specifically, it means that when a first discharge capacity after the initial charge and discharge and a capacity after the number of charge and discharge cycles that can be expected during normal use are compared, the capacity after charge and discharge cycles is not significantly decreased compared with the first discharge capacity after the initial charge and discharge. Here, "the number that can be expected during normal use" varies depending on the usage of the lithium secondary battery and it is, for example, 30 times, 50 times, 70 times, 100 times, 300 times, or 500 times. The "capacity after charge and discharge cycles is not significantly decreased compared with the first discharge capacity after the initial charge and discharge" means that although depending on the application for the lithium secondary battery, for example, the capacity after the charge and discharge cycles is 60% or more, 65% or more, 70% or more, 75% or more, 80% or more, or 85% or more of the first discharge capacity after the initial charge and discharge.

In the present specification, the numerical range described as a preferable range or the like may be replaced with a numerical range obtained by any combination of the upper limit value and the lower limit value described. For example, in a case where a parameter is preferably 50 or more, more preferably 60 or more, preferably 100 or less, and more preferably 90 or less, the parameter may be any of 50 or more and 100 or less, 50 or more and 90 or less, 60 or more and 100, or 60 or more and 90 or less.

### Examples

The present invention will hereinafter be described in detail by Examples and Comparative Examples. The present invention is not limited by the following examples.

### [Method for Measuring Irreversible Capacity Density of Lithium-Containing Compound]

The irreversible capacity density of the lithium-containing compound as the positive-electrode sacrificial agent used in each example, that is, the difference between the charge capacity density and the discharge capacity density was measured as follows. First, each lithium-containing compound, polyvinylidene fluoride, carbon black, and N-methylpyrrolidone (NMP) were mixed to prepare a slurry, and the slurry was then applied, dried, and pressed on an aluminum foil. A test cell using this electrode as a working electrode and a lithium metal as a counter electrode was prepared. After CC charge was performed with a current of 0.2 mAh/cm² and a predetermined cut-off voltage, CC discharge was performed until the voltage reached 3.0 V. The irreversible capacity density (mAh/g) was obtained by calculating the difference between the measured charge capacity density and the discharge capacity density.

### [Preparation and Performance Evaluation of Lithium Secondary Battery]

### [Example 1]

The lithium secondary battery of Example 1 was prepared as follows.

### (Preparation of Negative Electrode)

A negative electrode was obtained by washing a 10 µm electrolytic Cu foil with a sulfamic-acid-containing solvent, punching the resulting foil into a predetermined size (45 mm × 45 mm), ultrasonically washing the foil with ethanol, and then drying the foil.

### (Preparation of Positive Electrode)

In a dry room with a dew point of -30°C, 92.7 parts by mass of LiNi_{0.85}Co_{0.12}Al_{0.03}O₂ as a positive electrode active material, 3.3 parts by mass of Li₆Mn_{0.5}Co_{0.5}O₄ as a lithium-containing compound, 2.0 parts by mass of carbon black as a conductive additive, and 2.0 parts by mass of polyvinylidene fluoride (PVDF) as a binder, and N-methylpyrrolidone (NMP) as a solvent were mixed to obtain a positive electrode mixture. The obtained positive electrode mixture was applied to one surface of a 12 µm Al foil as a positive electrode current collector, press-molded, and then punched to a predetermined size (40 mm × 40 mm) by punching to obtain a positive electrode.

Li₆Mn_{0.5}Co_{0.5}O₄ was produced as follows. First, commercially available powders of Li₂O, MnO, and CoO were added to a container at a molar ratio of 6:1:1, and then pulverized and mixed. The obtained mixture was calcined under the condition at 800°C for 12 hours under a gas flow composed of 99% by volume of argon gas and 1% by volume of hydrogen gas to obtain Li₆Mn_{0.5}Co_{0.5}O₄.

### (Preparation of Separator)

As a separator, a separator having a predetermined size (50 mm × 50 mm), in which both surfaces of a 12 µm polyethylene microporous film were coated with a 2 µm polyvinylidene fluoride (PVDF), was prepared.

### (Assembly of Battery)

As an electrolyte solution, 4.0 M dimethoxyethane (DME) solution of LiN(SO₂F)₂(LFSI) was prepared.

Next, a laminate was obtained by laminating each constitution in the order of the positive electrode current collector, the positive electrode, the separator, and the negative electrode. Further, a 100 µm Al terminal and a 100 µm Ni terminal were bonded to the positive electrode current collector and the negative electrode by ultrasonic welding, respectively, and then the laminate was inserted into a laminated outer container. Then, the electrolyte solution was injected in the outer container. The resulting outer container was hermetically sealed to obtain a lithium secondary battery.

### (initial Charge)

Then, the lithium secondary battery was initially charged by CC charge with a current of 2.0 mA (0.05 C; 0.125 mA/cm²) and a cut-off voltage of 4.7 V.

### [Examples 2 to 3]

A lithium secondary battery was prepared in the same manner as in Example 1 except that the composition of the lithium-containing compound was changed to the composition shown in Table 1, and then initial charge was performed. Li₆Mn_{0.7}Co_{0.3}O₄ was produced by adjusting the addition ratio of powders of Li₂O, MnO, and CoO to 30:7:3 in molar ratio, and Li₆Mn_{0.3}Co_{0.7}O₄ was produced by adjusting the addition ratio of the powders of Li₂O, MnO, and CoO to 30:3:7 in molar ratio.

### [Comparative Example 1]

A lithium secondary battery was prepared in the same manner as in Example 1 except that Li₆MnO₄ was used as a lithium-containing compound, and then initial charge was performed. Li₆MnO₄ was produced by adjusting the addition ratio of powders of Li₂O and MnO to 3: 1 in molar ratio.

### [Comparative Example 2]

An attempt was made to prepare a lithium secondary battery in the same manner as in Example 1 except that Li₆CoO₄ was used as a lithium-containing compound. However, in a case of using Li₆CoO₄, the positive electrode mixture was gelated, and a lithium secondary battery cannot be produced under the same conditions.

Li₆MnO₄ was produced by adjusting the addition ratio of powders of Li₂O and CoO to 3: 1 in molar ratio.

### [Evaluation of Cycle Characteristics]

The energy density and cycle characteristics of each of the lithium secondary batteries prepared in Examples and Comparative Examples were evaluated as follows.

As described above, the lithium secondary battery of each example that was initially charged was CC-discharged at 2.0 mA (0.05 C; 0.125 mA/cm²) until the voltage reached 3.0 V (initial discharge). Then, the charge and discharge cycle in which the battery was charged at 20 mA (0.5 C; 1.25 mA/cm²) until the voltage reached 4.2 V and discharged at 20 mA (0.5 C; 1.25 mA/cm²) until the voltage reached 3.0 V was repeated 99 times at a temperature condition of 25°C. Supposing that the initial charge and discharge cycle is counted as a first cycle, a ratio of a discharge capacity determined from the 100th cycle discharge to a discharge capacity determined from the second cycle discharge was calculated as a capacity maintaining ratio (%) and was used as an index for the cycle characteristics. This means that the higher the capacity maintaining ratio, the more excellent the cycle characteristics. The capacity maintaining ratio in each example is shown in Table 1.

**Table 1**

| Sample No. | Lithium-containing compound | | | Capacity maintaining ratio (%) |
|---|---|---|---|---|
| | Composition | Irreversible capacity density (mAh/g) | Addition ratio (cell capacity ratio %) | |
| Example 1 | Li₆Mn_{0.5}Co_{0.5}O₄ | 850 | 14 | 85 |
| Example 2 | Li₆Mn_{0.7}Co_{0.3}O₄ | 700 | 10 | 81 |
| Example 3 | Li₆Mn_{0.3}Co_{0.7}O₄ | 800 | 10 | 81 |
| Comparative Example 1 | Li₆MnO₄ | 50 | 1 | 55 |
| Comparative Example 2 | Li₆CoO₄ | - | - | - |

In Table 1, the irreversible capacity density is a value when measured by the above method with the charge cut-off voltage of 4.7 V. In addition, the addition ratio means a proportion of the irreversible capacity of the lithium-containing compound to the cell capacity obtained from the initial discharge of the battery. In Comparative Example 2, since the lithium secondary battery could not be stably prepared as described above, the performance of the battery was not evaluated.

From Table 1, it was found that compared to Comparative Example using Li₆MnO₄ or Li₆CoO₄ as the lithium-containing compound serving as the positive-electrode sacrificial agent, Examples using Li₆MnₓCo₁₋ₓO₄ (0 < x < 1) had excellent cycle characteristics and productivity.

### [Evaluation of Influence of Cut-Off Voltage at Initial Charge on Cycle Characteristics]

Next, in the lithium secondary batteries prepared in Examples 1 to 3, the change in the capacity maintaining ratio when the cut-off voltage of the initial charge was changed was examined.

### [Test Examples 1 to 5]

First, the lithium secondary battery of Example 1 containing the lithium-containing compound having a composition of Li₆Mn_{0.5}Co_{0.5}O₄ was initially charged in the same manner as in Example 1 except that the cut-off voltage was set to 4.2 V, 4.3 V, 4.4 V, 4.7 V, or 5.0 V. Then, the capacity maintaining ratio was measured by the same method as described above. The capacity maintaining ratio in each example is shown in Table 2.

### [Test Examples 6 and 7]

The lithium secondary battery of Example 2 containing the lithium-containing compound having a composition of Li₆Mn_{0.7}Co_{0.3}O₄ was initially charged in the same manner as in Example 1 except that the cut-off voltage was set to 4.4 V or 4.7 V. Then, the capacity maintaining ratio was measured by the same method as described above. The capacity maintaining ratio in each example is shown in Table 2.

### [Test Examples 8 and 9]

The lithium secondary battery of Example 3 containing the lithium-containing compound having a composition of Li₆Mn_{0.3}Co_{0.7}O₄ was initially charged in the same manner as in Example 1 except that the cut-off voltage was set to 4.4 V or 4.7 V. Then, the capacity maintaining ratio was measured by the same method as described above. The capacity maintaining ratio in each example is shown in Table 2.

**Table 2**

| Sample No. | Lithium-containing compound | | | Cut-off voltage (V) | Capacity maintaining ratio (%) |
|---|---|---|---|---|---|
| | Composition | Irreversible capacity density (mAh/g) | Addition ratio (cell capacity ratio %) | | |
| Test Example 1 | Li₆Mn_{0.5}Co_{0.5}O₄ | 250 | 4 | 4.2 | 76 |
| Test Example 2 | Li₆Mn_{0.5}Co_{0.5}O₄ | 300 | 5 | 4.3 | 78 |
| Test Example 3 | Li₆Mn_{0.5}Co_{0.5}O₄ | 750 | 13 | 4.4 | 83 |
| Test Example 4 | Li₆Mn_{0.5}Co_{0.5}O₄ | 850 | 14 | 4.7 | 85 |
| Test Example 5 | Li₆Mn_{0.5}Co_{0.5}O₄ | 870 | 15 | 5.0 | 75 |
| Test Example 6 | Li₆Mn_{0.7}Co_{0.3}O₄ | 500 | 8 | 4.4 | 80 |
| Test Example 7 | Li₆Mn_{0.7}Co_{0.3}O₄ | 700 | 10 | 4.7 | 81 |
| Test Example 8 | Li₆Mn_{0.3}Co_{0.7}O₄ | 700 | 12 | 4.4 | 83 |
| Test Example 9 | Li₆Mn_{0.3}Co_{0.7}O₄ | 800 | 10 | 4.7 | 81 |

From the results of Test Examples 1 to 5, it was found that the lithium secondary battery of the present embodiment had higher cycle characteristics when the initial charge was performed with the cut-off voltage within a predetermined range. In addition, from the results of Test Examples 6 to 9, it was found that the cycle characteristics were further enhanced in the case of the initial charge with the cut-off voltage within the predetermined range, regardless of the composition of the lithium-containing compound as the positive-electrode sacrificial agent.

### [Introduction of Buffering Function Layer]

Next, in the lithium secondary battery of the present embodiment, the change in the cycle characteristics when the buffering function layer was introduced was examined.

### [Example 4]

The lithium secondary battery of Example 4 was manufactured as follows. First, a positive electrode having a positive electrode current collector, a negative electrode, a separator, and an electrolyte were prepared in the same manner as in Example 3. Next, a buffering function layer was formed on one surface of the separator as follows.

A resin solution obtained by dissolving a PVDF resin in N-methylpyrrolidone (NMP) was applied onto the separator with a bar coater. The separator onto which the resin solution was applied was immersed in a water bath and then dried sufficiently at room temperature to form a fibrous and ionically conductive layer on the separator (it should be noted that the ionically conductive layer exhibits an ionically conductive function when an electrolyte solution (a 4 M dimethoxyethane (DME) solution of LiN(SO₂F)₂(LFSI)) which will be described later, is poured at the time of battery assembly).

The average fiber diameter of the fibrous and ionically conductive layer formed on the separator was observed and measured with a scanning electron microscope (SEM) to be 100 nm.

Then, Ni was deposited under vacuum conditions on the separator having a fibrous and ionically conductive layer formed thereon. The ionically conductive layer deposited with Ni was observed with an SEM equipped with an energy dispersion type X-ray analyzer (EDX). It was confirmed that the Ni was distributed so as to cover the fibrous and ionically conductive layer and a fibrous buffering function layer covered on the surface of the fibrous and ionically conductive layer with the electrically conductive layer was obtained.

The section of the buffering function layer prepared using FIB was observed by SEM and the average thickness of the buffering function layer was found to be 10 µm. As a result of the observation of the buffering function layer with a transmission electron microscope, the average thickness of the thin Ni film, that is, the electrically conductive layer and the porosity of the buffering function layer were found to be 20 nm and 90%, respectively.

Next, a laminate was obtained by laminating the positive electrode current collector, the positive electrode, the separator having the buffering function layer formed thereon, and the negative electrode in this order. Lamination was performed such that the buffering function layer was arranged to face the negative electrode. Further, a 100 µm Al terminal and a 100 µm Ni terminal were bonded to the positive electrode current collector and the negative electrode by ultrasonic welding, respectively, and then the laminate was inserted into a laminated outer container. Next, the electrolyte solution was injected in the outer container. The resulting outer container was hermetically sealed to obtain a lithium secondary battery.

Then, the lithium secondary battery was initially charged by CC charge with a current of 2.0 mA (0.05 C; 0.125 mA/cm²) and a cut-off voltage of 4.4 V. The capacity maintaining ratio of the prepared lithium secondary battery of Example 4 was measured in the same manner as above. The measured capacity maintaining ratio is shown in Table 3 together with the results of Test Example 8.

**Table 3**

| Sample No. | Type | Irreversible capacity density (mAh/g) | Buffering function layer | Capacity maintaining ratio (%) |
|---|---|---|---|---|
| Example 3 (Test Example 8) | Li₆Mn_{0.3}Co_{0.7}O₄ | 700 | Absence | 83 |
| Example 4 | Li₆Mn_{0.3}Co_{0.7}O₄ | 700 | Presence | 83 |

From Table 3, it was found that the capacity maintaining ratio was maintained even when the buffering function layer was introduced in the lithium secondary battery of the present embodiment. That is, it was found that the lithium secondary battery of Example 4 had a high energy density, and excellent cycle characteristics and productivity, and further had a low volume expansion coefficient due to the charge and discharge of the battery.

### Industrial Applicability

Since the lithium secondary battery of the present invention has a high energy density and excellent cycle characteristics and productivity, it has industrial applicability as a power storage device used in various applications.

### Reference Signs List

- 100, 300: lithium secondary battery
- 110: positive electrode
- 120: separator
- 130: negative electrode
- 140: positive electrode current collector
- 210: negative electrode terminal
- 220: positive electrode terminal
- 310: buffering function layer
- 410: ionically and electronically conductive fiber
- 420: lithium metal
- 430: ionically conductive layer
- 440: electronically conductive layer

## Claims

1. A lithium secondary battery, comprising:
a positive electrode; and
a negative electrode which does not have a negative electrode active material,
wherein the positive electrode comprises a positive electrode active material and a lithium-containing compound represented by Li₆MnₓCo₁₋ₓO₄ (0 < x < 1).

2. The lithium secondary battery according to Claim 1, wherein the battery is initially charged under a charging condition in which a cut-off voltage is 4.3 V or more and 5.0 V or less.

3. The lithium secondary battery according to Claim 1 or 2, wherein a content of the lithium-containing compound is 1.0% by mass or more and 15.0% by mass or less relative to a total mass of the positive electrode.

4. The lithium secondary battery according to any one of Claims 1 to 3, wherein the lithium-containing compound is a compound represented by Li₆MnₓCo₁₋ₓO₄ (0.2 ≤ x ≤ 0.8).

5. The lithium secondary battery according to any one of Claims 1 to 4, wherein the negative electrode is an electrode consisting of at least one selected from the group consisting of Cu, Ni, Ti, Fe, other metals that are not alloyed with Li, and alloys thereof, and stainless steel (SUS).

6. The lithium secondary battery according to any one of Claims 1 to 5, wherein the battery has an energy density of 350 Wh/kg or more.

7. A method for using the lithium secondary battery according to any one of Claims 1 to 6, comprising:
performing a charge and discharge cycle including at least one discharging step and at least one charging step, after charging the battery at a cut-off voltage of 4.3 or more and 5.0 or less,
wherein the charge and discharge cycle is performed such that a cut-off voltage in the charging step is lower than a cut-off voltage at the time of the first charge performed at a cut-off voltage of 4.3 or more and 5.0 or less.

8. A method for manufacturing a lithium secondary battery, comprising:
a step of preparing a positive electrode comprising a positive electrode active material and a lithium-containing compound represented by Li₆MnₓCo₁₋ₓO₄ (0 < x < 1), and a negative electrode which does not have a negative electrode active material;
a step of arranging the positive electrode and the negative electrode so as to face each other; and
a step of applying a voltage between the positive electrode and the negative electrode to initially charge the battery under a charging condition in which a cut-off voltage is 4.3 V or more and 5.0 V or less.

9. The method for manufacturing a lithium secondary battery according to Claim 8, wherein a content of the lithium-containing compound is 1.0% by mass or more and 15.0% by mass or less relative to a total mass of the positive electrode.

10. The method for manufacturing a lithium secondary battery according to Claim 8 or 9, wherein the lithium-containing compound is a compound represented by Li₆MnₓCo₁₋ₓO₄ (0.2 ≤ x ≤ 0.8).

11. The method for manufacturing a lithium secondary battery according to any one of Claims 8 to 10, wherein the negative electrode is an electrode consisting of at least one selected from the group consisting of Cu, Ni, Ti, Fe, other metals that are not alloyed with Li, and alloys thereof, and stainless steel (SUS).
